# EUROPÄISCHE PATENTANMELDUNG

(11) **EP 4 052 793 A1**
(43) Veröffentlichungstag der Anmeldung: **07.09.2022**
(21) Anmeldenummer: 22159937.6
(22) Anmeldetag: 03.03.2022
(51) Int. Cl.: B01L 3/02

(54) **PIPETTIERVORRICHTUNG**

(30) Priorität: 05.03.2021 DE 202021101129 U
(71) Anmelder: BRAND GMBH + CO KG, 97877 Wertheim (DE)
(72) Erfinder: Grein, Tom, 97877 Wertheim (DE); Kurz, Markus, 97877 Wertheim (DE)
(74) Vertreter: Von Rohr Patentanwälte Partnerschaft mbB

(57) **Zusammenfassung**

Die Erfindung betrifft eine Pipettiervorrichtung zum Aufnehmen und Abgeben von Fluidvolumina, die eine mittels eines Betätigungsmittels betätigbare Abwerfereinrichtung aufweist, um eine auf die Pipettiervorrichtung aufgesteckte Pipettenspitze abzuwerfen bzw. zu lösen. Gemäß einem ersten Aspekt weist die Pipettiervorrichtung eine Kopplungseinrichtung auf, die derart ausgebildet ist, dass im unbetätigten Zustand Betätigungsmittel und Abwerfereinrichtung entkoppelt sind und bei Betätigung des Betätigungsmittels dieses mit der Abwerfereinrichtung gekoppelt wird, wodurch eine auf das Betätigungsmittel ausgeübte Kraft auf die Abwerfereinrichtung übertragbar ist. Gemäß einem weiteren Aspekt kann die Pipettiervorrichtung eine Positioniereinrichtung aufweisen, die ein Abwerfermittel, insbesondere eine Abwerferhülse, der Abwerfereinrichtung bei nicht aufgesteckter Pipettenspitze und unbetätigtem Betätigungsmittel in einer Grundstellung hält, die zwischen einer Abwurfstellung bei betätigtem Betätigungsmittel und einer Aufsteckstellung mit aufgesteckter Pipettenspitze liegt.

## Beschreibung

Die Erfindung betrifft eine Pipettiervorrichtung zum Aufnehmen und Abgeben von Fluidvolumina mit den Merkmalen des Oberbegriffs von Anspruch 1 oder 10.

Eine Pipettiervorrichtung hat eine Verdrängereinrichtung an der eine Pipettenspitze luftdicht anbringbar und wieder trennbar ist. Die Verdrängereinrichtung und die Pipettenspitze bilden gemeinsam einen abgeschlossenen Luftraum. Die Verdrängereinrichtung, vorzugsweise in Form einer Kolben-Zylinder-Anordnung, verändert das Volumen des Raumes und ermöglicht so das Aufsaugen und Abgeben von Flüssigkeit in und aus der Pipettenspitze. Eine Pipettiervorrichtung kann mehrere Verdrängereinrichtungen mit jeweiliger Pipettenspitze aufweisen. Die Verdrängereinrichtung kann von Hand oder mittels Motor betätigt werden. Die Pipettiervorrichtung kann auch von handgehalten oder Teil eines Laborautomaten sein.

Die Pipettenspitze kann mit der Verdrängereinrichtung mittels Steckverbindung verbunden werden. Die Pipettiervorrichtung hat dazu an der Verdrängereinrichtung ein rohrförmiges zylindrisch oder konisch ausgeführtes Endstück, auf das die Pipettenspitze mit ihrer kongruenten rohrförmigen Öffnung aufgesteckt wird.

Zum Trennen bzw. Abwerfen der Pipettenspitze von der Verdrängereinrichtung ist an der Pipettiervorrichtung ein eine Abwerfereinrichtung bzw. ein Abwerfermechanismus vorgesehen, um die Pipettenspitze vom Endstück der Verdrängereinrichtung zu lösen. Der Abwerfermechanismus wird von Hand oder mittels Motor angetrieben.

Aus der EP 0 566 939 A1 ist beispielsweise ein Abwerfermechanismus bekannt, der die Betätigungskraft zum Trennen der Steckverbindung reduziert. Dazu ist ein Untersetzungsgetriebe vorgesehen, das auch den Betätigungsweg reduziert. Da verschiedene Pipettenspitzen von unterschiedlichen Herstellern verfügbar sind, und diese sich geometrisch unterscheiden, ist die relative Position der aufgesteckt verbundenen Pipettenspitzen auf dem Endstück der Verdrängereinrichtung unterschiedlich. Ein solch reduzierter Betätigungsweg zum Trennen der Pipettenspitze ist häufig nicht ausreichend jegliche Pipettenspitze vom Endstück vollständig zu lösen.

Aus der WO 2002/00345 A2 und der EP 1 272 825 B1 sind Abwerfermechanismen bekannt, die die Pipettenspitze von der Verdrängereinrichtung mittels Federkraft lösen. Die dazu vorgesehene Druckfeder wird zuvor beim Aufstecken gespannt. Die Relativbewegung zwischen Pipettenspitze und Pipettiervorrichtung wird genutzt, in dem eine Abwerfereinrichtung an der Pipettiervorrichtung einfedert und in dieser Position durch einen Verriegelungsmechanismus gehalten wird. Durch Betätigung eines Druckknopfes kann die Verriegelung freigegeben werden, so dass sich die Druckfeder entspannt und die Abwerfereinrichtung in Richtung des Endstücks treibt. Je nach Geometrie der Pipettenspitze ist deren relative Position auf dem Endstück so, dass entweder die Federkraft nicht ausreicht die Pipettenspitze zu trennen oder die Steckverbindung nicht ausreichend fest und luftdicht ist.

Aufgabe der Erfindung ist es ein Abwerfermechanismus an einer Pipettiervorrichtung zu schaffen, der die Betätigungskraft und/oder den Betätigungsweg reduziert und gleichzeitig die Pipettenspitze sicher auf das Endstück der Verdrängereinrichtung aufstecken und trennen bzw. abwerfen lässt.

Die obige Aufgabe wird durch eine Pipettiervorrichtung gemäß Anspruch 1 oder 10 gelöst. Vorteilhafte Weiterbildungen sind Gegenstand der Unteransprüche.

Die vorschlagsgemäße Pipettiervorrichtung zum Aufnehmen und Abgeben von Fluidvolumina weist eine Verdrängereinrichtung, eine Abwerfereinrichtung und ein Betätigungsmittel auf.

Die Verdrängereinrichtung weist ein Endstück auf, an dem eine Pipettenspitze lösbar angebracht werden kann. Bei der Verdrängereinrichtung handelt es sich vorzugsweise um eine Kolben-Zylinder-Anordnung.

Die Abwerfereinrichtung ist dazu ausgebildet, eine am Endstück angebrachte Pipettenspitze von dem Endstück bzw. der Pipettiervorrichtung zu lösen und abzuwerfen. Hierzu weist die Abwerfereinrichtung ein Abwerfermittel, insbesondere eine Abwerferhülse, auf.

Zum, insbesondere manuellen, Betätigen der Abwerfereinrichtung, insbesondere des Abwerfermittels, weist die Pipettiervorrichtung ein Betätigungsmittel, insbesondere einen Betätigungshebel oder Betätigungsknopf, auf. Durch Betätigung ist das Betätigungsmittel von einer Ruhestellung in eine Betätigungsstellung verstellbar.

Durch Verstellen des Betätigungsmittels von der Ruhestellung in die Betätigungsstellung wird das Abwerfermittel relativ zum Endstück in eine Abwurfstellung bewegt bzw. ist die Abwerfereinrichtung hierzu ausgebildet. Hierdurch wird eine am Endstück angebrachte Pipettenspitze relativ zum Endstück bewegt und schließlich von der Pipettiervorrichtung abgeworfen. Insbesondere wird von dem Abwerfermittel die Pipettenspitze von dem Endstück heruntergedrückt bzw. deren kraftschlüssige Verbindung gelöst.

Gemäß einem Aspekt der Erfindung weist die Pipettiervorrichtung eine Kopplungseinrichtung auf, die mit dem Betätigungsmittel und der Abwerfereinrichtung zusammenwirkt. In der Ruhestellung des Betätigungsmittels sind das Betätigungsmittel und die Abwerfereinrichtung entkoppelt bzw. ist die Kopplungseinrichtung derart ausgebildet. Durch Betätigen des Betätigungsmittels bzw. Verstellen des Betätigungsmittels koppelt die Kopplungseinrichtung das Betätigungsmittel mit der Abwerfereinrichtung. Mit anderen Worten sind das Betätigungsmittel und die Abwerfereinrichtung in der Ruhestellung des Betätigungsmittels entkoppelt und in der Betätigungsstellung miteinander gekoppelt.

Durch das Koppeln ist eine auf das Betätigungsmittel ausgeübte Kraft auf die Abwerfereinrichtung, insbesondere das Abwerfermittel, übertragbar. Diese Kraft wird genutzt, um das Abwerfermittel in die Abwurfstellung zu bewegen und die Pipettenspitze von der Pipettiervorrichtung zu lösen und abzuwerfen.

In vorteilhafter Weise findet eine Kopplung zwischen Betätigungsmittel und Abwerfereinrichtung nur dann statt, wenn die Pipettenspitze abgeworfen werden soll bzw. das Betätigungsmittel hierzu betätigt wird. Dies erleichtert das Aufschieben bzw. Aufstecken der Pipettenspitze, da die Abwerfereinrichtung beim Aufstecken der Pipettenspitze vom Betätigungsmittel entkoppelt ist. Zudem kann sichergestellt werden, dass auch bei Pipettenspitzen mit unterschiedlichen Geometrien ein sicheres Aufstecken und, insbesondere luftdichtes, Halten der Pipettenspitze einerseits und ein sicheres bzw. vollständiges Trennen bzw. Abwerfen der Pipettenspitze andererseits erfolgt. Insbesondere kann sichergestellt werden, dass die Pipettenspitze mit kurzem, immer gleichem Betätigungsweg abgelöst wird, unabhängig der relativen Position der Pipettenspitze zum Endstück, da das Abwerfermittel direkt an der Pipettenspitze anliegen kann. Dies führt insbesondere auch zu einer reduzierten Betätigungskraft und einer verbesserten Ergonomie für das von Hand durchgeführte Abwerfen der Pipettenspitze.

Vorzugsweise ist die Kopplungseinrichtung in der Betätigungsstellung des Betätigungsmittels mit der Abwerfereinrichtung in Eingriff bzw. durch Verstellen des Betätigungsmittels in die Betätigungsstellung mit der Abwerfereinrichtung in Eingriff bringbar. In der Ruhestellung des Betätigungsmittels ist die Kopplungseinrichtung vorzugsweise außer Eingriff mit der Abwerfereinrichtung. Hierdurch wird in vorteilhafter Weise ein besonders einfacher und sicherer Kopplungsmechanismus erzielt. Das Verstellen des Betätigungsmittels bis zum Koppeln ist relativ kurz und so ist insgesamt der Verstellweg des Betätigungsmittels von der Ruhestellung in die Betätigungsstellung und Abwurfstellung stets kurz und gleich lang.

Besonders bevorzugt weist die Kopplungseinrichtung ein Eingriffsmittel bzw. Eingriffselement und die Abwerfereinrichtung ein Gegeneingriffsmittel bzw. Gegeneingriffselement auf. Hierdurch wird in besonders einfacher Weise der Eingriff zur Kopplung von Abwerfereinrichtung und Kopplungseinrichtung ermöglicht.

Vorzugsweise sind das Eingriffsmittel und das Gegeneingriffsmittel formschlüssig, kraftschlüssig und/oder reibschlüssig in Eingriff bringbar bzw. im Eingriff miteinander verbunden. Hierdurch ist vorzugsweise das Betätigungsmittel mit der Abwerfereinrichtung gekoppelt. Dies ermöglicht eine besonders einfache und/oder sichere Kopplung.

Das Eingriffsmittel und das Gegeneingriffsmittel weisen vorzugsweise jeweils zueinander zumindest bereichsweise komplementär ausgebildete Verzahnungen zum insbesondere formschlüssigen Zusammenwirken auf. Das Eingriffsmittel und das Gegeneingriffsmittel können stattdessen auch kraftschlüssig und/oder reibschlüssig ineinandergreifen, wenn das Betätigungsmittel betätigt wird bzw. das Betätigungsmittel mit der Abwerfereinrichtung über die Kopplungseinrichtung gekoppelt ist. Dies ermöglicht eine besonders einfache und/oder sichere Kopplung. Zudem können in besonders vorteilhafter Weise unterschiedliche Kopplungsstellungen erzielt werden, je nachdem, welche Zähne ineinandergreifen und wie fein die Zahnteilung ist. Eine kraft- oder reibschlüssige Kopplung ermöglicht eine frei variable Kopplungsstellung und bedarf lediglich einer gleich kurzen Betätigung bis zur Koppelung. Dies ist einem kurzen Betätigungsweg auch bei Pipettenspitzen mit unterschiedlichen Geometrien zuträglich. Insbesondere kann das Abwerfermittel, je nach aufgesteckter Pipettenspitze, unterschiedliche Positionen einnehmen, insbesondere so, dass es direkt am oberen Rand der Pipettenspitze anliegt, und trotzdem eine sichere und effektive Kopplung ermöglicht wird.

Das Eingriffsmittel ist vorzugsweise in einem Gehäuse der Pipettiervorrichtung geführt und/oder mittels des Betätigungsmittels bewegbar, insbesondere verschiebbar, und/oder beweglich mit dem Betätigungsmittel verbunden. Hierdurch wird eine besonders einfache und sichere Kopplung ermöglicht, bei der das Eingriffsmittel zum Eingriff in das Gegeneingriffsmittel geführt bzw. bewegt werden kann, beispielsweise durch eine Kulissenführung. Insbesondere kann so auch sichergestellt werden, dass Eingriffsmittel und Gegeneingriffsmittel in der Ruhestellung nicht in Eingriff sind, Betätigungsmittel und Abwerfereinrichtung entsprechend entkoppelt sind.

Besonders bevorzugt ist das Eingriffsmittel entlang einer Längsachse der Pipettiervorrichtung bewegbar. Hierdurch wird in besonders einfacher Weise die Beweglichkeit bzw. Verschiebbarkeit des Eingriffsmittels erzielt, insbesondere kann die Betätigung des Betätigungsmittels eine Längsbewegung bzw. Translation des Eingriffsmittels bewirken.

Vorzugsweise kommt das Eingriffsmittel durch Bewegung zumindest entlang der Längsachse der Pipettiervorrichtung mit dem Gegeneingriffsmittel in Eingriff oder aus dem Eingriff. Besonders bevorzugt weist die Pipettiervorrichtung hierzu eine Kulisse auf, in der das Eingriffsmittel geführt ist. Hierdurch wird in besonders einfacher Weise der Eingriff bzw. die Kopplung ermöglicht.

Alternativ oder zusätzlich kann das Eingriffsmittel um eine quer zur Längsachse der Pipettiervorrichtung verlaufende Achse drehbar sein. Insbesondere bewirkt in diesem Fall eine Betätigung des Betätigungsmittels eine Drehbewegung des Eingriffsmittels, so dass es mit dem Gegeneingriffsmittel in Eingriff gelangt.

Vorzugsweise ist das Gegeneingriffsmittel durch Verstellen des Betätigungsmittels in die Betätigungsstellung bewegbar, insbesondere verschiebbar, wenn die Kopplungseinrichtung, insbesondere das Eingriffsmittel, mit der Abwerfereinrichtung, insbesondere dem Gegeneingriffsmittel, gekoppelt ist. Besonders bevorzugt wird bei einem anfänglichen Betätigen des Betätigungsmittels die Kopplungseinrichtung aktiviert, so dass das Eingriffsmittel und Gegeneingriffsmittel in Eingriff gelangen bzw. das Betätigungsmittel mit der Abwerfereinrichtung bzw. dem Gegeneingriffsmittel gekoppelt wird. Ein weiteres Verstellen des Betätigungsmittels in die Betätigungsstellung bewirkt ein Bewegen bzw. Verschieben des gekoppelten Gegeneingriffsmittels. Hierdurch wird in besonders einfacher Weise eine Kraftübertragung von dem Betätigungsmittel, über die Kopplungseinrichtung bzw. das Eingriffsmittel, auf die Abwerfereinrichtung bzw. das Gegeneingriffsmittel bewirkt.

Das Gegeneingriffsmittel ist mit dem Abwerfermittel vorzugsweise derart verbunden, dass ein Bewegen, insbesondere Verschieben, des Gegeneingriffsmittels ein Bewegen, insbesondere Verschieben des Abwerfermittels bewirkt. In besonders einfacher Weise kann damit die durch das Betätigungsmittel ausgeübte Kraft, über das Gegeneingriffsmittel, auf das Abwerfermittel übertragen werden. Mittels dieser Kraft kann dann die Pipettenspitze sicher bzw. vollständig von dem Endstück bzw. der Pipettiervorrichtung getrennt bzw. abgeworfen werden, insbesondere mittels des beweglichen Abwerfermittels vom Endstück geschoben werden.

Die Pipettiervorrichtung weist vorzugsweise ein Vorspannmittel bzw. Vorspannelement, insbesondere eine Feder, auf. Mittels des Vorspannmittels kann das Abwerfermittel vorzugsweise vorgespannt werden, insbesondere eine Vorspannkraft auf das Abwerfermittel entgegen einer Anbringrichtung bzw. in einer Abwurfrichtung der Pipettiervorrichtung ausgeübt werden. In vorteilhafter Weise wird über das Vorspannmittel eine Kraft entgegen der Anbringrichtung bzw. in Abwurfrichtung ausgeübt, was das Abwerfen erleichtern bzw. unterstützen kann.

Unter der Abwurfrichtung ist vorzugsweise die Richtung zu verstehen, in der das Abwerfermittel zum Abwerfen der Pipettenspitze bewegt wird, bzw. die Richtung, in die sich die Pipettenspitze relativ zum Endstück beim Abwerfen bewegt. Vorzugsweise ist die Abwurfrichtung parallel zur Längsachse der Pipettiervorrichtung und/oder stimmt mit der Richtung überein, in der Flüssigkeit mittels der Pipettiervorrichtung abgeben werden kann.

Unter der Anbringrichtung ist vorzugsweise die Richtung zu verstehen, in der die Pipettenspitze relativ zum Endstück bewegt wird, wenn die Pipettenspitze auf das Endstück aufgesteckt bzw. aufgeschoben wird. Üblicherweise erfolgt ein Anbringen bzw. Aufstecken der Pipettenspitze dadurch, dass das Endstück in die Pipettenspitze hineingedrückt wird, also durch eine Bewegung des Endstücks in die Richtung entgegengesetzt zu der Anbringrichtung. Die Anbringrichtung ist daher nur als Relativbewegung der Pipettenspitze zum Endstück zu verstehen, auch wenn tatsächlich beim Anbringen das Endstück und nicht die Pipettenspitze bewegt wird. Die Anbringrichtung ist vorzugsweise entgegengesetzt zur Abwurfrichtung und/oder parallel zur Längsachse der Pipettiervorrichtung und/oder stimmt mit der Richtung überein, in der Flüssigkeit in die Pipettiervorrichtung eingesaugt werden kann.

Vorzugsweise steht das Vorspannmittel sowohl bei entkoppelter als auch bei gekoppelter Kopplungseinrichtung, bevorzugt über das Gegeneingriffsmittel, mit dem Abwerfermittel in Wirkverbindung. Hierdurch kann in vorteilhafter Weise erreicht werden, dass die Kraft, die beim Aufstecken der Pipettenspitze aufgewandt wird, teilweise durch ein Spannen des Vorspannmittels gespeichert werden kann. Diese Kraft kann dann genutzt werden, das Abwerfen zu erleichtern bzw. zu unterstützen.

Vorzugsweise umgibt das Abwerfermittel das Endstück zumindest teilweise radial und das Endstück ragt durch eine Öffnung des Abwerfermittels aus dem Abwerfermittel heraus, insbesondere auch in einer Grundstellung, bevor eine Pipettenspitze aufgesteckt wurde. Hierdurch wird das Aufstecken einer Pipettenspitze erleichtert.

Besonders bevorzugt ist die Vorspannkraft des Vorspannmittels so gewählt, dass das Abwerfermittel in der Ruhestellung des Betätigungsmittels bzw. wenn Betätigungsmittel und Abwerfereinrichtung entkoppelt sind in der Grundstellung verbleibt, insbesondere wenn keine Pipettenspitze aufgesteckt ist. In der Grundstellung ragt das Endstück gleich weit oder weiter aus dem Abwerfermittel heraus als in der Abwurfstellung des Abwerfermittels. Hierdurch wird das Aufstecken einer Pipettenspitze erleichtert, da auch nach dem Abwerfen einer Pipettenspitze wieder die Grundstellung eingenommen wird mit definiertem Herausragen des Endstücks, und eine neue Pipettenspitze folglich ohne Weiteres aufgesteckt werden kann.

Das Abwerfermittel ist vorzugsweise in der Ruhestellung des Betätigungsmittels bzw. wenn das Betätigungsmittel und die Abwerfereinrichtung entkoppelt sind, in die Anbringrichtung bis in eine Aufsteckstellung bewegbar, insbesondere entgegen der Vorspannkraft des Vorspannmittels.

Die Aufsteckstellung ist vorzugsweise die Stellung des Abwerfermittels, wenn eine Pipettenspitze auf die Pipettiervorrichtung bzw. das Endstück aufgesteckt ist. Je nach Geometrie der Pipettenspitze kann die Aufsteckstellung unterschiedlich sein. Vorzugsweise liegt das Abwerfermittel in der Aufsteckstellung direkt am oberen Rand der Pipettenspitze an.

Wenn ein Vorspannmittel vorgesehen ist, ist seine Vorspannkraft vorzugsweise so gewählt, dass das Abwerfermittel bei einer am Endstück angebrachten und an das Abwerfermittel angrenzenden Pipettenspitze in seiner Aufsteckstellung verbleibt. Insbesondere ist die Vorspannkraft also geringer als die Haltekraft zwischen Endstück und Pipettenspitze. Hierdurch kann auf zusätzliche Haltemechanismen für das Abwerfermittel, wie eine Verriegelung in der Aufsteckstellung, verzichtet werden. Dies ist einem besonders einfachen Aufbau zuträglich. Zudem können verschiedene Aufsteckstellungen, insbesondere stufenlos, realisiert werden, je nach Geometrie der Pipettenspitze.

Ein weiterer Aspekt der vorliegenden Erfindung, der auch unabhängig realisiert sein kann, betrifft eine Positioniereinrichtung der Pipettiervorrichtung. Mittels der Positioniereinrichtung ist das Abwerfermittel in der Grundstellung, die zwischen der Trennstellung bzw. Abwurfstellung und der Aufsteckstellung liegt, gehalten.

In vorteilhafter Weise wird hierdurch sichergestellt, dass sich das Abwerfermittel ohne aufgesteckte Pipettenspitze und in Ruhestellung des Betätigungsmittels immer in der gleichen Stellung, nämlich der Grundstellung befindet bzw. nach dem Abwerfen einer Pipettenspitze die Grundstellung einnimmt.

Die Grundstellung liegt vorschlagsgemäß zwischen der Aufsteckstellung und der Abwurfstellung, insbesondere ragt das Endstück in der Grundstellung also weiter aus dem Abwerfermittel hervor als in der Abwurfstellung. Dies ist einem besonders einfachen Aufstecken bzw. Anbringen der Pipettenspitze zuträglich. Insbesondere kann das Endstück auf einfache Weise in die Öffnung der Pipettenspitze gefügt werden bzw. ist ein solches Fügen erleichtert.

Ferner wird beim Aufstecken der Pipettenspitze das Abwerfermittel von der (mittleren) Grundstellung in die Aufsteckstellung verlagert. In dieser können sich das Abwerfermittel und die Pipettenspitze berühren, so dass beim Abwerfen kein Leerhub auftritt.

Vorzugsweise weist die Positioniereinrichtung ein erstes Vorspannmittel bzw. Vorspannelement, insbesondere eine erste Feder, auf, wobei das erste Vorspannmittel eine Vorspannkraft auf das Abwerfermittel entgegen der Anbringrichtung bzw. in Abwurfrichtung der Pipettiervorrichtung ausübt. Hierdurch wird insbesondere ermöglicht, dass das Abwerfermittel beim Abwerfen auch tatsächlich bis in die Grundstellung bewegt wird und nicht bereits in einer Stellung zwischen der Aufsteckstellung und Grundstellung verharrt, auch wenn die Pipettenspitze bereits vor Erreichen der Grundstellung abgeworfen wird.

Insbesondere kann es sich bei dem ersten Vorspannmittel um das bereits genannte Vorspannmittel handeln, das das Abwerfen erleichtern bzw. unterstützen soll. In vorteilhafter Weise wird so das gleiche Vorspannmittel einerseits zum Erleichtern bzw. Unterstützen des Abwerfens und zum anderen zum Treiben des Abwerfermittels in die Grundstellung genutzt. Dies ist einem besonders einfachen Aufbau zuträglich.

Vorzugsweise weist die Positioniereinrichtung ein zweites Vorspannmittel bzw. Vorspannelement, insbesondere eine zweite Feder, auf. Mit einem Ende ist das zweite Vorspannmittel an dem Abwerfermittel befestigt und mit dem anderen Ende an der Pipettiervorrichtung, insbesondere an der Verdrängereinrichtung. Durch den Abstand beider Enden voneinander hält das zweite Vorspannmittel das Abwerfermittel in der Grundstellung definiert, insbesondere über die Länge und/oder Vorspannkraft des zweiten Vorspannmittels.

Besonders bevorzugt übt das zweite Vorspannmittel eine Vorspannkraft auf das Abwerfermittel in der Anbringrichtung bzw. entgegen der Abwurfrichtung aus, also insbesondere entgegengesetzt zu der Richtung, in der das erste Vorspannmittel eine Vorspannkraft auf das Abwerfermittel ausübt.

In vorteilhafter Weise wird durch das zweite Vorspannmittel sichergestellt, dass das Abwerfermittel, insbesondere nach dem Abwerfen, von der Abwurfstellung zurück in die Grundstellung getrieben wird. Insbesondere kann das Endstück hierdurch weiter freigelegt werden, um das Aufstecken einer neuen Pipettenspitze zu erleichtern.

Vorzugsweise weist die Positioniereinrichtung ein Flanschelement auf, das an der Verdrängereinrichtung beweglich und zwischen einem ersten Anschlag an der Verdrängereinrichtung und dem zweiten Vorspannmittel gelagert ist, wobei das zweite Vorspannmittel das Flanschelement gegen den ersten Anschlag drängt. Hierdurch wird in einfacher Weise sichergestellt, dass das Abwerfermittel nicht über die Grundstellung hinaus von dem zweiten Vorspannmittel verschoben wird.

Vorzugsweise weist das Abwerfermittel einen zweiten Anschlag auf, vorzugsweise eine Anformung, der bei einer Bewegung des Abwerfermittels entgegen der Anbringrichtung gegen das Flanschelement stößt und bei einer weiteren Bewegung des Abwerfermittels, insbesondere angetrieben durch das erste Vorspannmittel und/oder durch das Betätigungsmittel, das Flanschelement entgegen der Wirkung der Vorspannkraft des zweiten Vorspannelements von dem Anschlag entfernend mitnimmt. Hierdurch wird in einfacher Weise ein Bewegen des Abwerfermittels über die Grundstellung hinaus in die Abwurfstellung, insbesondere entgegen der Kraft des zweiten Vorspannmittels, realisiert.

Vorzugsweise drängt das erste Vorspannmittel das Abwerfermittel entgegen der Anbringrichtung gegen das Flanschelement und hält das Abwerfermittel in der Grundstellung. Hierdurch wird ein besonders sicheres Verharren des Abwerfermittels in der Grundstellung ermöglicht.

Beim Verstellen des Betätigungsmittels von der Betätigungsstellung in die Ruhestellung wird vorzugsweise das Abwerfermittel durch die Vorspannkraft des zweiten Vorspannmittels in seine Grundstellung bewegt. Insbesondere nimmt nach dem Abwerfen einer Pipettenspitze das Abwerfermittel wieder die Grundstellung und das Betätigungsmittel die Ruhestellung ein, in der Betätigungsmittel und Abwerfereinrichtung voneinander entkoppelt sind.

Das Betätigungsmittel weist vorzugsweise eine Untersetzungseinrichtung für die Betätigung von der Ruhestellung in die Betätigungsstellung auf. Hierdurch kann in vorteilhafter Weise die Kraft, die zum Abwerfen benötigt wird, verringert werden, so dass die Nutzung erleichtert wird.

Besonders bevorzugt weist die Untersetzungseinrichtung einen Hebel mit einem gehäusefesten Drehlager an einem Ende, einen Betätigungsknopf an einem anderen Ende und dazwischen ein Drehlager zum Verbinden des Betätigungsmittels mit der Abwerfereinrichtung oder der Kopplungseinrichtung auf. Hierdurch wird in besonders einfacher Weise eine Untersetzung realisiert, was insbesondere einem einfachen Aufbau zuträglich ist.

Die vorgenannten Aspekte und Merkmale der vorliegenden Erfindung sowie die sich aus der weiteren Beschreibung ergebenden Aspekte und Merkmale der vorliegenden Erfindung können unabhängig voneinander, aber auch in beliebiger Kombination realisiert werden.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung.

Es zeigt:
- Fig. 1: einen schematischen Schnitt durch eine vorschlagsgemäße Pipettiervorrichtung gemäß einer ersten Ausführungsform vor dem Aufstecken einer Pipettenspitze und einem Betätigungsmittel in Ruhestellung;
- Fig. 2: einen schematischen Schnitt der Pipettiervorrichtung gemäß der ersten Ausführungsform mit aufgesteckter Pipettenspitze und dem Betätigungsmittel in Ruhestellung;
- Fig. 3: einen schematischen Schnitt der Pipettiervorrichtung gemäß der ersten Ausführungsform mit aufgesteckter Pipettenspitze und dem Betätigungsmittel in Kopplungsstellung;
- Fig. 4: einen schematischen Schnitt der Pipettiervorrichtung gemäß der ersten Ausführungsform mit dem Betätigungsmittel in Betätigungsstellung beim Abwerfen der Pipettenspitze;
- Fig. 5: einen schematischen Schnitt einer Pipettiervorrichtung gemäß einer zweiten Ausführungsform in einer Stellung korrespondierend zu Fig. 1;
- Fig. 6: einen schematischen Schnitt der Pipettiervorrichtung gemäß der zweiten Ausführungsform in einer Stellung korrespondierend zu Fig. 2;
- Fig. 7: einen schematischen Schnitt durch die Pipettiervorrichtung gemäß der zweiten Ausführungsform korrespondierend zu der Stellung in Fig. 3; und
- Fig. 8: einen schematischen Schnitt durch die Pipettiervorrichtung gemäß der zweiten Ausführungsform in einer Stellung korrespondierend zu Fig. 4.

In den Figuren werden für gleiche oder ähnliche Teile dieselben Bezugszeichen verwendet, wobei entsprechende Eigenschaften und Vorteile erreicht werden, auch wenn eine wiederholte Beschreibung aus Vereinfachungsgründen weggelassen ist.

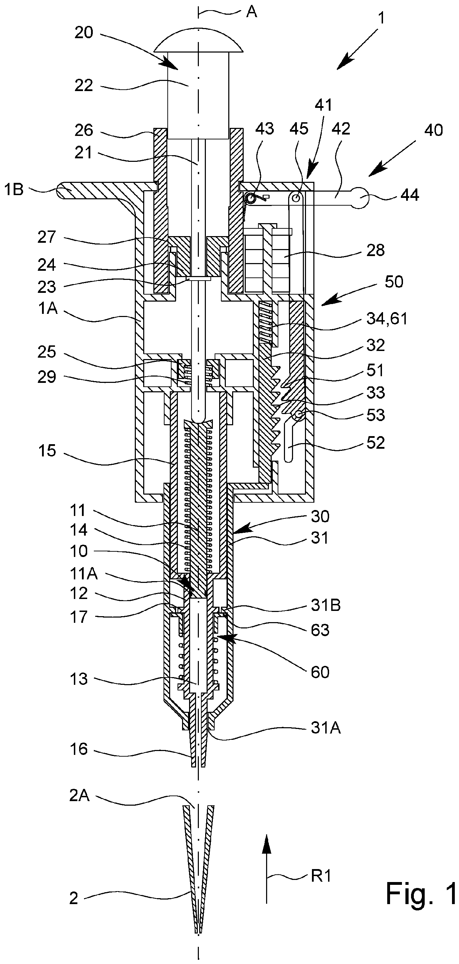

Fig. 1 zeigt eine vorschlagsgemäße Pipettiervorrichtung 1 zum Aufnehmen und Abgeben von Fluidvolumina.

Die Pipettiervorrichtung 1 weist eine Verdrängereinrichtung 10 auf. Mittels der Verdrängereinrichtung 10 kann ein Fluid, insbesondere eine Flüssigkeit, in die Pipettiervorrichtung 1 aufgenommen und anschließend wieder von dieser abgegeben werden.

Die Verdrängereinrichtung 10 weist vorzugsweise ein Verdrängermittel 11 und ein Verdrängergehäuse 12 auf.

Das Verdrängergehäuse 12 bildet einen Hohlraum 13, in dem das Fluid aufgenommen werden kann. Der Hohlraum 13 bildet vorzugsweise eine Fluidaufnahme.

Die Pipettiervorrichtung 1 und/oder Verdrängereinrichtung 10 hat vorzugsweise eine langgestreckte Form bzw. weist eine Längsachse A auf. Die Längsachse A verläuft vorzugsweise mittig durch die Verdrängereinrichtung 10, insbesondere das Verdrängermittel 11, das Verdrängergehäuse 12 und/oder den Hohlraum 13.

Wenn im Folgenden Begriffe wie "axial", "axiale Richtung" u. dgl. verwendet werden, so bezieht sich dies vorzugsweise auf die Längsachse A. Entsprechend beziehen sich Begriffe wie "radial" bzw. "radiale Richtung" u. dgl. ebenfalls auf die Längsachse A, also eine Richtung senkrecht zur Längsachse A.

Das Verdrängermittel 11 ist vorzugsweise axial und/oder entlang der Längsachse A bewegbar.

Mittels des Verdrängermittels 11 ist das Volumen der Fluidaufnahme bzw. des Hohlraums 13 vorzugsweise veränderbar, so dass bei Vergrößerung des Hohlraums 13 wegen des entstehenden Unterdrucks Fluid in den Hohlraum 13 gezogen werden kann und bei Verkleinerung des Volumens wieder abgegeben bzw. aus dem Hohlraum 13 verdrängt werden kann.

Besonders bevorzugt ist die Verdrängereinrichtung 10 eine Kolben-Zylinder-Anordnung bzw. ist das Verdrängermittel 11 als Kolben und das Verdrängergehäuse 12 als Zylinder ausgebildet.

Das Verdrängermittel 11 ist vorzugsweise gegen das Verdrängergehäuse 12 abgedichtet, insbesondere mittels einer Dichtung 11A.

Die Verdrängereinrichtung 10 weist vorzugsweise ein Rückstellmittel 14, insbesondere eine Rückstellfeder auf. Mittels des Rückstellmittels 14 ist das Verdrängermittel 11 vorzugsweise in eine Ausgangsstellung bewegbar bzw. rückstellbar, insbesondere die Stellung mit maximalem Volumen der Fluidaufnahme bzw. des Hohlraums 13, und/oder in Einsaugrichtung des Fluides bzw. entgegen der Abgaberichtung des Fluides.

Die Verdrängereinrichtung 10 bildet vorzugsweise einen Schaft 15 der Pipettiervorrichtung 1 oder ist in dem Schaft 15 angeordnet.

Vorzugsweise ist das Verdrängergehäuse 12 von dem Schaft 15 gebildet.

Die Verdrängereinrichtung 10 weist vorzugsweise ein Endstück 16 auf bzw. bildet ein Endstück 16.

Das Endstück 16 ist vorzugsweise von dem Schaft 15 und/oder einstückig mit dem Verdrängergehäuse 12 gebildet.

Das Endstück 16 ist vorzugsweise dazu ausgebildet, die Pipettiervorrichtung 1 bzw. die Verdrängereinrichtung 10 mit einer Pipettenspitze 2 zu verbinden.

Eine Pipettenspitze 2 ist vorzugsweise ein, insbesondere zumindest im Wesentlichen konisches bzw. kegelförmiges, Rohr mit zwei sich gegenüberliegenden Öffnungen, deren jeweiliger Querschnitt sich unterscheidet. Mit der größeren Öffnung 2A kann die Pipettenspitze 2 auf das Endstück 16 aufgesteckt werden. Über die Pipettenspitze 2 und das Endstück 16 kann dann Fluid in den Hohlraum 13 gesaugt werden und anschließend über das Endstück 16 und die Pipettenspitze 2 wieder abgegeben werden.

Mit der Pipettiervorrichtung 1 verwendbare Pipettenspitzen 2 können unterschiedliche Geometrien, beispielsweise unterschiedliche Längen, Öffnungswinkel o. dgl., aufweisen.

Das Endstück 16 ist zur Verbindung mit Pipettenspitzen 2 unterschiedlicher Geometrien ausgebildet und kann vorzugsweise als vom Schaft 15 separiertes Teil ausgewechselt werden.

Vorzugsweise ist die Pipettenspitze 2 kraftschlüssig, insbesondere reibschlüssig mit dem Endstück 16 verbindbar, insbesondere auf das Endstück 16 aufsteckbar oder formschlüssig verbindbar und am bzw. mit dem Endstück 16 gasdicht verbunden.

Das Endstück 16 und/oder eine auf das Endstück 16 aufgesteckte Pipettenspitze 2 erstrecken/erstreckt sich vorzugsweise entlang der Längsachse A. Bevorzugt verläuft die Längsachse A mittig durch das Endstück 16 bzw. eine aufgesteckte Pipettenspitze 2.

Vorzugsweise weist die Pipettiervorrichtung 1 eine Hubeinrichtung 20 auf, mittels der die Verdrängereinrichtung 10, insbesondere das Verdrängermittel 11, betätigt werden kann.

Die Hubeinrichtung 20 weist vorzugsweise eine Hubstange 21 auf, die sich axial und/oder entlang der Längsachse A erstreckt. Die Hubstange 21 ist vorzugsweise in axialer Richtung und/oder in Richtung des Verdrängermittels 11 bewegbar.

Die Hubeinrichtung 20 weist vorzugsweise ein Bedienelement 22 auf, mittels dem die Hubeinrichtung 20 betätigt werden kann.

Vorzugsweise bewirkt ein Betätigen des Bedienelements 22, insbesondere ein Niederdrücken, dass die Hubstange 21 gegen das Verdrängermittel 11 gedrückt wird bzw. eine Kraft auf das Verdrängermittel 11 ausübt, so dass sich das Verdrängermittel 11 in axialer Richtung bzw. in Richtung des Hohlraums 13 bzw. des Endstücks 16 bewegt und das Volumen des Hohlraums 13 verkleinert. Dementsprechend kann vorzugsweise durch Betätigen der Hubeinrichtung 20 bzw. des Bedienelements 22 Fluid aus der Pipettiervorrichtung 1, insbesondere über das Endstück 16 und die Pipettenspitze 2 abgegeben werden, insbesondere aus der Fluidaufnahme bzw. dem Hohlraum 13 verdrängt werden.

Vorzugsweise nimmt die Hubeinrichtung 20 bzw. die Hubstange 21 und/oder das Bedienelement 22 selbsttätig den unbetätigten Zustand ein, insbesondere mittels der Rückstellung durch das Rückstellmittel 14.

Die Pipettiervorrichtung 1 weist vorzugsweise ein Gehäuse 1A auf.

Die Verdrängereinrichtung 10 und/oder die Hubeinrichtung 20 sind/ist vorzugsweise zumindest teilweise in dem Gehäuse 1A angeordnet. Vorzugsweise bildet der Schaft 15 einen Teil des Gehäuses 1A.

Die Verdrängereinrichtung 10 bzw. die Hubeinrichtung 20 bzw. das Bedienelement 22 ist vorzugsweise manuell betätigbar. Alternativ oder zusätzlich ist auch eine automatisierte bzw. motorisierte Betätigung der Verdrängereinrichtung 10 möglich.

Im Fall einer manuellen Betätigung weist die Pipettiervorrichtung 1, insbesondere das Gehäuse 1A, vorzugsweise einen Vorsprung 1B auf. Der Vorsprung 1B ist vorzugsweise einstückig mit dem Gehäuse 1A gebildet, beweglich im Gehäuse 1A gelagert und/oder erstreckt sich in radialer Richtung. Der Vorsprung 1B dient vorzugsweise als Fingerauflage für einen Benutzer (nicht dargestellt) bei der Betätigung der Pipettiervorrichtung 1 bzw. der Verdrängereinrichtung 10 bzw. der Hubeinrichtung 20 bzw. des Bedienelements 22.

Vorzugsweise ist der Hub der Hubeinrichtung 20 bzw. der Hubstange 21 bzw. des Verdrängermittels 11 durch einen ersten Anschlag 24 und/oder einen zweiten Anschlag 25 begrenzt bzw. begrenzbar.

Vorzugsweise weist die Hubstange 21 einen Anschlagabschnitt 23 auf. Der Anschlagabschnitt 23 ist vorzugsweise einstückig mit der Hubstange 21 gebildet und/oder erstreckt sich von der Hubstange 21 in radialer Richtung und/oder ist flanschartig.

Beim Betätigen der Pipettiervorrichtung 1, Verdrängereinrichtung 10, Hubeinrichtung 20, bzw. Bedienelements 22, insbesondere beim Bewegen der Hubstange 21 in axialer Richtung, kommt es vorzugsweise zu einem Anschlagen des Anschlagabschnitt 23 am zweiten Anschlag 25, was die axiale Bewegung bzw. Hubbewegung begrenzt.

Bei der Rückstellung der Pipettiervorrichtung 1 bzw. der Verdrängereinrichtung 10 bzw. der Hubeinrichtung 20, insbesondere mittels des Rückstellmittels 14, kommt es vorzugsweise zwischen dem Anschlagabschnitt 23 und dem ersten Anschlag 24 zu einem Anschlag, was die axiale Bewegung bzw. Hubbewegung begrenzt.

Beim Anschlag des Anschlagabschnitt 23 an dem ersten Anschlag 24 ist vorzugsweise der unbetätigte Zustand erreicht und/oder das Volumen im Hohlraum 13 maximal. Insbesondere ist das maximal aufnehmbare Fluidvolumen durch die Position des ersten Anschlags 24 festgelegt.

Vorzugsweise ist die axiale Position des ersten Anschlags 24 verstellbar bzw. einstellbar und/oder das maximal aufnehmbare Fluidvolumen bzw. das Volumen des Hohlraums 13. Hierzu weist die Pipettiervorrichtung 1 bzw. die Hubeinrichtung 20 vorzugsweise ein Einstellmittel 26 auf.

Vorzugsweise ist zwischen dem Einstellmittel 26 und dem ersten Anschlag 24 eine Gewindeverbindung 27 gebildet und/oder weist das Einstellmittel 26 ein Innengewinde und der erste Anschlag 24 ein korrespondierendes Außengewinde auf.

Über die Gewindeverbindung 27 kann die axiale Position des ersten Anschlags 24 und somit das maximal aufnehmbare Fluidvolumen eingestellt werden.

Vorzugsweise weist die Pipettiervorrichtung 1 ein Anzeigemittel 28 auf, das mit dem Einstellmittel 26 gekoppelt ist und das eingestellte maximale Fluidvolumen anzeigt.

Die Pipettiervorrichtung 1 bzw. Hubeinrichtung 20 kann für einen Überhub ausgebildet sein. In diesem Fall bildet der zweite Anschlag 25 vorzugsweise einen Überhubanschlag. Der zweite Anschlag 25 ist vorzugsweise mittels einer Überhubfeder 29 in seine Anschlagsposition gespannt. Wenn es zu einem Anschlag des Anschlagabschnitts 23 und des zweiten Anschlags 25 kommt, kann durch Aufwenden einer zusätzlichen Kraft der zweite Anschlag 25 entgegen der Federkraft der Überhubfeder 29 in axialer Richtung bewegt werden, so dass es zu einem Überhub kommen kann.

Vorschlagsgemäß weist die Pipettiereinrichtung 1 eine Abwerfereinrichtung 30 zum Lösen bzw. Trennen bzw. Abwerfen der Pipettenspitze 2 und eine Betätigungseinrichtung bzw. ein Betätigungsmittel 40 auf, um die Abwerfereinrichtung 30 zu betätigen bzw. zu aktivieren.

Vorzugsweise weist die Pipettiervorrichtung 1 eine Kopplungseinrichtung 50 zum Koppeln des Betätigungsmittels 40 mit der Abwerfereinrichtung 30 und/oder eine Positioniereinrichtung 60 zum Positionieren der Abwerfereinrichtung 30, insbesondere eines Abwerfermittels 31 der Abwerfereinrichtung 30, in einer Grundstellung auf.

Im Folgenden wird der Aufbau und das Zusammenwirken der Abwerfereinrichtung 30, des Betätigungsmittels 40, der Kopplungseinrichtung 50 und der Positioniereinrichtung 60 anhand der Fig. 1 bis 4 näher erläutert, die die Pipettiereinrichtung 1 gemäß einer ersten Ausführungsform in verschiedenen Stellungen bzw. Betätigungspositionen zeigt.

Fig. 1 zeigt die Pipettiervorrichtung 1 vor dem Aufstecken der Pipettenspitze 2 bei unbetätigtem Betätigungsmittel 40. Die unbetätigte Stellung des Betätigungsmittels 40 wird im Folgenden als Ruhestellung bezeichnet.

Die Abwerfereinrichtung 30 weist vorzugsweise ein Abwerfermittel 31, insbesondere eine Abwerferhülse, auf.

Das Abwerfermittel 31 ist vorzugsweise zylinderartig ausgebildet und/oder umgibt die Verdrängereinrichtung 10 bzw. den Schaft 15 zumindest teilweise und/oder bildet eine Hülse.

Fig. 1 zeigt die Abwerfereinrichtung 30 bzw. das Abwerfermittel 31 in einer Grundstellung. Die Grundstellung ist vorzugsweise die Stellung, bei der das Endstück 16 frei ist bzw. keine Pipettenspitze 2 aufgesteckt ist. In der Grundstellung ist die Abwerfereinrichtung 30 bzw. das Betätigungsmittel 40 vorzugsweise unbetätigt, insbesondere befindet sich das Betätigungsmittel 40 in der Ruhestellung.

In der Grundstellung ragt das Endstück 16 vorzugsweise aus der Abwerfereinrichtung 30 bzw. dem Abwerfermittel 31, insbesondere axial, hervor. Vorzugsweise weist das Abwerfermittel 31 eine Öffnung 31A auf, die insbesondere an einem axialen Ende des Abwerfermittels 31 angeordnet ist, durch die sich das Endstück 16 in der Grundstellung hindurch erstreckt bzw. aus der das Endstück 16 in der Grundstellung hervorragt.

Das Abwerfermittel 31 umgibt das Endstück 16 vorzugsweise zumindest teilweise radial.

Es sind jedoch auch Lösungen möglich, bei denen das Endstück 16 vollständig von dem Abwerfermittel 31 umschlossen ist bzw. nicht aus der Öffnung 31A hervorragt. Beispielsweise könnte die Öffnung 31A auch mit einer Kappe o. dgl. verschlossen sein, die dann vor der Benutzung bzw. dem Aufstecken einer Pipettenspitze 2 abgenommen werden muss.

Vorzugsweise erstreckt sich die Längsachse A, insbesondere mittig, durch das Abwerfermittel 31 bzw. die Öffnung 31A.

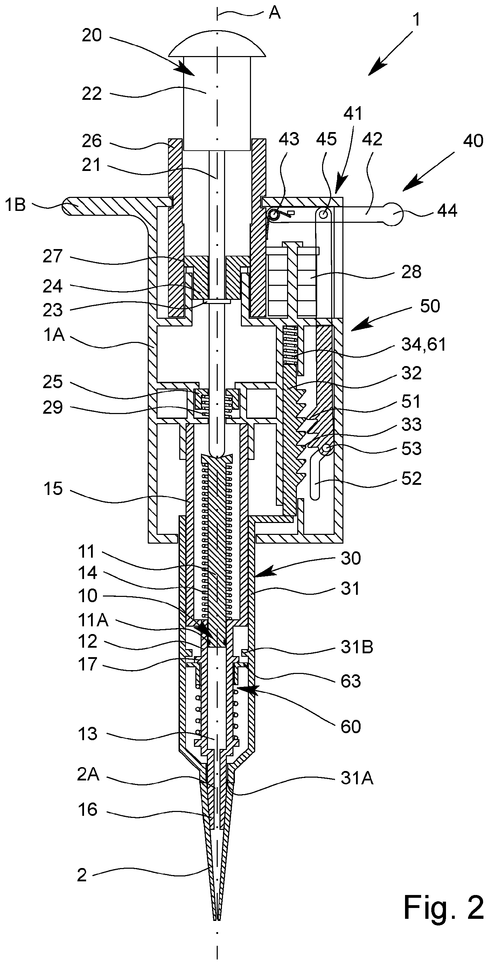

Fig. 2 zeigt die Pipettiervorrichtung 1 mit aufgesteckter Pipettenspitze 2. Das Betätigungsmittel 40 ist unbetätigt bzw. befindet sich in Ruhestellung. Fig. 2 zeigt also die Pipettiervorrichtung 1 im Gebrauchszustand, in dem wie eingangs beschrieben Fluid über die aufgesteckte Pipettenspitze 2 aufgenommen und abgegeben werden kann.

Die Pipettenspitze 2 wird vorzugsweise in axialer Richtung bzw. in einer Aufsteckrichtung R1 auf die Pipettiervorrichtung 1 bzw. das Endstück 16 aufgesteckt.

Die Aufsteckrichtung R1 ist in Fig. 1 mit einem Pfeil dargestellt. Sie entspricht vorzugsweise der Richtung der Fluidaufnahme bzw. der Rückstellrichtung der Verdrängereinrichtung 10, insbesondere des Verdrängermittels 11, bzw. der Hubeinrichtung 20. Die Aufsteckrichtung R1 ist insbesondere entgegengesetzt zu der Abgaberichtung des Fluides bzw. der Bewegungsrichtung der Hubeinrichtung 20, insbesondere der Hubstange 21, bzw. des Verdrängermittels 11 bei Betätigung der Hubeinrichtung 20, insbesondere des Bedienelements 22.

Wie bereits eingangs erwähnt, ist das Aufstecken der Pipettenspitze 2 in Aufsteckrichtung R1 als Relativbewegung zwischen Pipettiervorrichtung 1 und Pipettenspitze 2 zu verstehen. Üblicherweise wird zum Aufstecken die Pipettiervorrichtung 1 bzw. das Endstück 16 zu der (unbewegten) Pipettenspitze 2 hinbewegt bzw. in die Pipettenspitze 2 bzw. deren Öffnung 2A gedrückt, die Pipettiervorrichtung 1 also entgegen der Aufsteckrichtung R1 auf die Pipettenspitze 2 zubewegt. Dies entspricht einer Relativbewegung der Pipettenspitze 2 in Aufsteckrichtung R1.

Die Aufsteckrichtung R1 ist vorzugsweise allein durch die Pipettiervorrichtung 1 definiert, nämlich als die Richtung, in die eine (beliebige) Pipettenspitze 2 auf das Endstück 16 aufgesteckt werden kann. Insbesondere hängt die Aufsteckrichtung R1 nicht von der verwendeten Pipettenspitze 2 ab.

Beim Aufstecken der Pipettenspitze 2 wird die Abwerfereinrichtung 30 bzw. das Abwerfermittel 31 vorzugsweise in axialer Richtung bzw. in Aufsteckrichtung R1 verschoben.

Bei dem in Fig. 2 gezeigten Zustand bzw. bei aufgesteckter Pipettenspitze 2 befindet sich die Abwerfereinrichtung 30 bzw. das Abwerfermittel 31 vorzugsweise in einer von der Grundstellung verschiedenen Aufsteckstellung. Bei der Aufsteckstellung ist die Abwerfereinrichtung 30 bzw. das Abwerfermittel 31 gegenüber der Grundstellung in Aufsteckrichtung R1 verlagert bzw. verschoben. Insbesondere ragt in der Aufsteckstellung das Endstück 16 weiter aus dem Abwerfermittel 31 bzw. der Öffnung 31A hervor als in der Grundstellung.

Vorzugsweise liegt in der Aufsteckstellung das axiale Ende des Abwerfermittels 31 an der Pipettenspitze 2 an.

Je nach Geometrie der verwendeten Pipettenspitze 2 kann sich die Aufsteckstellung für verschiedene Pipettenspitzen 2 unterscheiden. Insbesondere kann die Pipettenspitze 2 unterschiedlich weit auf das Endstück 16 aufgesteckt sein, um eine stabile (reibschlüssige) Verbindung zwischen Pipettenspitze 2 und Endstück 16 herzustellen. Dies kann beispielsweise mit dem Öffnungswinkel bzw. dem Radius der Öffnung 2A variieren. Entsprechend ist das Abwerfermittel 31 je nach Pipettenspitze 2 mehr oder weniger aus der Grundstellung in Aufsteckrichtung R1 verschoben.

Besonders bevorzugt ist die Aufsteckstellung durch das direkte Anliegen von Abwerfermittel 31 und Pipettenspitze 2 bzw. der Öffnungen 2A und 31A definiert, hängt also davon ab, wie weit die Pipettenspitze 2 auf das Endstück 16 aufgeschoben bzw. aufgesteckt ist.

Zum Trennen bzw. Abwerfen bzw. Lösen der Pipettenspitze 2 von der Pipettiervorrichtung 1, insbesondere dem Endstück 16, kann ein Benutzer das Betätigungsmittel 40 betätigen bzw. die Abwerfereinrichtung 30 aktivieren.

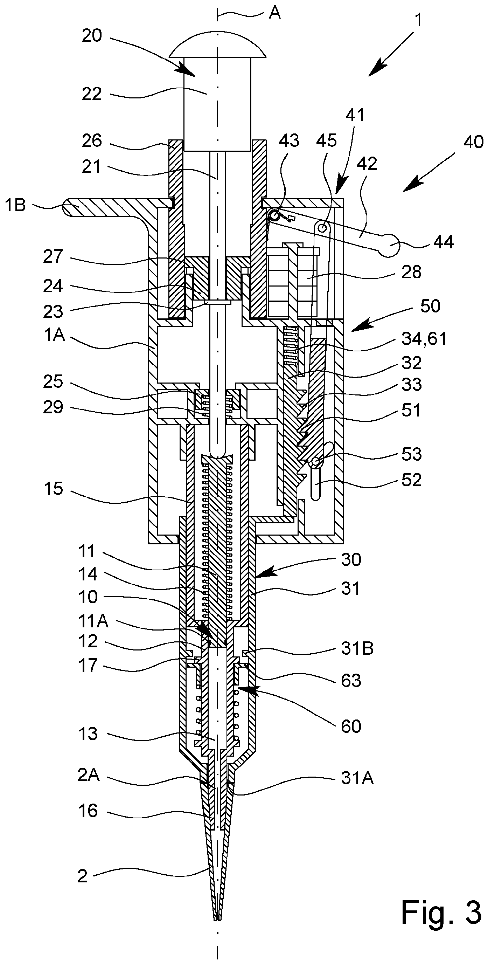

Fig. 3 zeigt das Betätigungsmittel 40 in einer teilbetätigten Stellung bzw. Zwischenstellung bzw. Koppelstellung, auf die später noch genauer eingegangen wird. In dieser Stellung befindet sich die Abwerfereinrichtung 30 bzw. das Abwerfermittel 31 (noch) in der Aufsteckstellung bzw. ist die Pipettenspitze 2 (noch) mit der Pipettiervorrichtung 1 bzw. dem Endstück 16 verbunden bzw. darauf aufgesteckt.

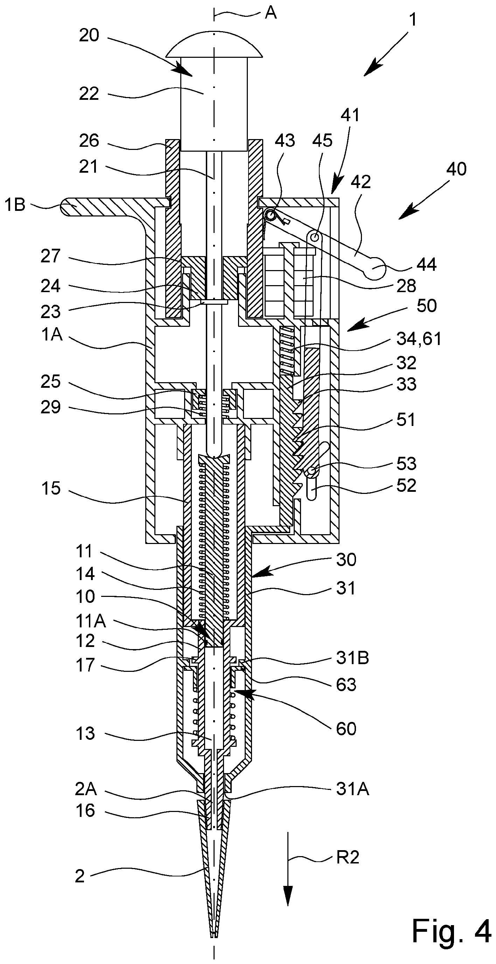

Fig. 4 zeigt die Pipettiervorrichtung 1 bei (vollständig) betätigtem Betätigungsmittel 40. Die betätigte Stellung des Betätigungsmittels 40 wird im Folgenden als Betätigungsstellung bezeichnet. Durch Betätigen des Betätigungsmittels 40 wird das Betätigungsmittel 40 vorzugsweise aus seiner Ruhestellung, insbesondere über eine Zwischen- bzw. Koppelstellung, in die Betätigungsstellung gebracht.

Das Bewegen des Betätigungsmittels 40 in die Betätigungsstellung bewirkt vorzugsweise ein Bewegen der Abwerfereinrichtung 30 bzw. des Abwerfermittels 31 entgegen der Aufsteckrichtung R1 bzw. in eine Abwurfrichtung R2 bzw. in eine Abwurfstellung, die in Fig. 4 dargestellt ist.

Die Abwurfrichtung R2 ist vorzugsweise entgegengesetzt zur Aufsteckrichtung R1 und/oder in Richtung der Fluidabgabe bzw. der Richtung des Verdrängermittels 11 bzw. der Hubstange 21 bei Betätigung des Bedienelements 22 und/oder entgegengesetzt zur Aufnahmerichtung des Fluides bzw. zur Rückstellrichtung des Verdrängermittels 11 bzw. der Hubstange 21.

Durch die Bewegung des Abwerfermittels 31 in Abwurfrichtung R2 bzw. von der Aufsteckstellung in die Abwurfstellung wird vorzugsweise in axialer Richtung von dem Abwerfermittel 31 auf die Pipettenspitze 2 eine Kraft ausgeübt, die die Pipettenspitze 2 von der Pipettiereinrichtung 1 bzw. dem Endstück 16 schiebt bzw. davon trennt oder abwirft. Insbesondere wird die Pipettenspitze 2 von dem Abwerfermittel 31 von der Pipettiervorrichtung 1 bzw. dem Endstück 16 heruntergeschoben.

Wie bereits zuvor erwähnt liegt das Abwerfermittel 31 vorzugsweise axial an der Pipettenspitze 2 in der Aufsteckstellung an, so dass es beim Bewegen des Abwerfermittels 31 in die Abwurfstellung unmittelbar zu einer Kraftübertragung auf die Pipettenspitze 2 kommt bzw. so dass kein Leerhub entsteht, bei dem sich das Abwerfermittel 31 auf die Pipettenspitze 2 erst zubewegen muss, bevor es zu einer Kraftübertragung kommt.

Vorzugsweise ist die Abwurfstellung von der Grundstellung verschieden. Insbesondere ist die Abwerfereinrichtung 30 bzw. das Abwerfermittel 31 in der Abwurfstellung weiter in Abwurfrichtung R2 verschoben als in der Grundstellung und/oder ragt das Endstück 16 in der Abwurfstellung weniger weit aus dem Abwerfermittel 31 bzw. der Öffnung 31A hervor als in der Grundstellung. Es sind jedoch auch Lösungen möglich, bei denen die Grundstellung und die Abwurfstellung zumindest im Wesentlichen identisch sind.

Die Bewegung des Abwerfermittels 31 von der Aufsteckstellung in die Abwurfstellung erfolgt vorzugsweise mittels eines Verbindungselements bzw. Verbindungsmittels 32, das zwischen dem Betätigungsmittel 40 und dem Abwerfermittel 31 angeordnet ist.

Eine Betätigung des Betätigungsmittels 40 bewirkt vorzugsweise eine Kraftübertragung auf das Verbindungsmittel 32, so dass sich dieses in axialer bzw. in Abwurfrichtung R2 bewegt. Das Verbindungsmittel 32 und das Abwerfermittel 31 sind vorzugsweise wirkverbunden oder wirkverbindbar, so dass die Bewegung des Verbindungsmittels 32 auf das Abwerfermittel 31 übertragen wird bzw. übertragbar ist.

Besonders bevorzugt ist das Verbindungsmittel 32 als Abwerferschieber ausgebildet bzw. schiebt das Abwerfermittel 31 bei Betätigung in Abwurfrichtung R2.

Beim Darstellungsbeispiel sind das Abwerfermittel 31 und das Verbindungsmittel 32 zwei separate Bauteile. Insbesondere erstreckt sich ein Vorsprung des Abwerfermittels 31 in radiale Richtung, an dem das Verbindungsmittel 32 axial anliegt. Es sind jedoch auch Lösungen möglich, bei denen Abwerfermittel 31 und Verbindungsmittel 32 einstückig ausgebildet sind oder in anderer Weise wirkverbunden sind, beispielsweise auch nur mittelbar.

Die Bewegung des Abwerfermittels 31 in Aufsteckrichtung R1 bewirkt vorzugsweise eine Bewegung des Verbindungsmittels 32 in Aufsteckrichtung R1.

Die Abwerfereinrichtung 30 weist vorzugsweise ein Vorspannelement bzw. Vorspannmittel 34, insbesondere eine Vorspannfeder, auf, die sich vorzugsweise an dem Gehäuse 1A abstützt.

Durch Aufstecken der Pipettenspitze 2, insbesondere durch die Bewegung des Abwerfermittels 31 in Aufsteckrichtung R1, ist das Vorspannmittel 34 vorzugsweise spannbar, insbesondere stauchbar.

Die Vorspannkraft bzw. Federkraft des Vorspannmittels 34 ist vorzugsweise so gewählt, dass sie geringer ist als die Haltekraft zwischen Pipettenspitze 2 und Endstück 16. In dem in Fig. 2 gezeigten Zustand ist das Vorspannmittel 34 also vorzugsweise gespannt und wird aufgrund der kraft- bzw. reibschlüssigen Verbindung zwischen Pipettenspitze 2 und Endstück 16 in der gespannten Position gehalten.

Beim Betätigen des Betätigungsmittels 40 bewegen sich Abwerfermittel 31 und Verbindungsmittel 32 in Abwurfrichtung R2, so dass sich das Vorspannmittel 34 (wieder) (teil)entspannen kann. Auf diese Weise kann ein Teil der beim Aufstecken der Pipettenspitze 2 aufgewendeten Kraft bzw. Energie in dem Vorspannmittel 34 gespeichert werden und beim Abwurfvorgang wieder freigesetzt werden.

Vorzugsweise unterstützt das Vorspannmittel 34 das Bewegen in die Abwurfstellung bzw. das Abwerfen der Pipettenspitze 2. Insbesondere reduziert das Vorspannmittel 34 die zum Abwerfen benötigte Kraft, die auf das Betätigungsmittel 40 ausgeübt werden muss.

Im Folgenden wird die Kopplung der Abwerfereinrichtung 30 und des Betätigungsmittels 40 mittels der Kopplungseinrichtung 50 näher erläutert.

In der Ruhestellung des Betätigungsmittels 40 sind das Betätigungsmittel 40 und die Abwerfereinrichtung 30 vorzugsweise entkoppelt bzw. nicht wirkverbunden bzw. ist die Kopplungseinrichtung 50 derart ausgebildet. Dieser entkoppelte Zustand ist in den Fig. 1 und 2 dargestellt.

Insbesondere erfolgt das Aufstecken einer Pipettenspitze 2 und/oder das Bewegen der Abwerfereinrichtung 30, insbesondere des Abwerfermittels 31 bzw. Verbindungsmittels 32, in die Aufsteckstellung im entkoppelten Zustand bzw. führt zu keiner Wirkung auf das Betätigungsmittel 40.

Bei Betätigung des Betätigungsmittels 40 werden das Betätigungsmittel 40 und die Abwerfereinrichtung 30 mittels der Kopplungseinrichtung 50 wirkverbunden bzw. gekoppelt bzw. ist die Kopplungseinrichtung 50 dazu ausgebildet.

Das Koppeln von Betätigungsmittel 40 und Abwerfereinrichtung 30 wird vorzugsweise in einer Stellung zwischen der Ruhestellung und Betätigungsstellung des Betätigungsmittels 40 bewirkt, im Folgenden als Kopplungsstellung bezeichnet. Die Kopplungsstellung ist in Fig. 3 dargestellt.

Zwischen der Ruhestellung und der Kopplungsstellung des Betätigungsmittels 40 ist die Kopplungsrichtung 50 vorzugsweise vom Betätigungsmittel 40 und/oder von der Abwerfereinrichtung 30 entkoppelt. Insbesondere sind Abwerfereinrichtung 30 und Betätigungsmittel 40 entkoppelt bzw. nicht wirkverbunden.

Eine Bewegung bzw. Betätigung des Betätigungsmittels 40 von der Ruhestellung in die Kopplungsstellung bewirkt vorzugsweise eine Kopplung zwischen der Kopplungseinrichtung 50 und dem Betätigungsmittel 40 und/oder der Abwerfereinrichtung 30, insbesondere zwischen dem Betätigungsmittel 40 und der Abwerfereinrichtung 30 mittels der Kopplungseinrichtung 50. Bei der Bewegung bzw. Betätigung des Betätigungsmittels 40 von der Ruhestellung in die Kopplungsstellung findet vorzugsweise (noch) keine Kraftübertragung auf die Abwerfereinrichtung 30 statt.

Zwischen der Kopplungsstellung und der Betätigungsstellung des Betätigungsmittels 40 sind das Betätigungsmittel 40 und die Abwerfereinrichtung 30 mittels der Kopplungseinrichtung 50 vorzugsweise wirkverbunden bzw. gekoppelt.

Eine Bewegung bzw. Betätigung des Betätigungsmittels 40 von der Kopplungsstellung in die Betätigungsstellung bewirkt vorzugsweise eine Kraftübertragung vom Betätigungsmittel 40 über die Kopplungseinrichtung 50 auf die Abwerfereinrichtung 30, insbesondere so dass die Abwerfereinrichtung 30, insbesondere das Abwerfermittel 31, in Abwurfrichtung R2 bewegt wird bzw. bewegbar ist. Dies ist in Fig. 4 dargestellt.

Beim, vorzugsweise selbststätigen, Rückstellen des Betätigungsmittels 40 von der Betätigungsstellung in die Ruhestellung werden Betätigungsmittel 40 und Abwerfereinrichtung 30 vorzugsweise (wieder) entkoppelt, insbesondere bei bzw. kurz nach Erreichen der Kopplungsstellung, bzw. ist die Kopplungseinrichtung 50 hierzu ausgebildet.

Vorzugsweise ist die Kopplungseinrichtung 50 dauerhaft mit dem Betätigungsmittel 40 (wirk-)verbunden, insbesondere über ein Lager 45. Das Koppeln und Entkoppeln findet dementsprechend vorzugsweise durch ein (Wirk-)Verbinden und Trennen zwischen Kopplungseinrichtung 50 und Abwerfereinrichtung 30, insbesondere Verbindungsmittel 32, statt. Hier sind jedoch auch andere Lösungen möglich, bei denen eine (Wirk-)Verbindung zwischen Betätigungsmittel 40 und Kopplungseinrichtung 50 erst beim Bewegen des Betätigungsmittels 40 aus der Ruhestellung bzw. in die Kopplungsstellung erfolgt, und/oder bei dem Kopplungseinrichtung 50 und Abwerfereinrichtung 30 dauerhaft (wirk)verbunden sind.

Die (Wirk-)Verbindung bzw. Kopplung zwischen Kopplungseinrichtung 50 und Abwerfereinrichtung 30 ist vorzugsweise formschlüssig, kraftschlüssig und/oder reibschlüssig.

Das Koppeln des Betätigungsmittels 40 bzw. der Kopplungseinrichtung 50 mit der Abwerfereinrichtung 30 wird vorzugsweise durch einen, insbesondere formschlüssigen, kraftschlüssigen und/oder reibschlüssigen, Eingriff zwischen Kopplungseinrichtung 50 und Abwerfereinrichtung 30, insbesondere Verbindungsmittel 32, bewirkt.

Vorzugsweise weist die Kopplungseinrichtung ein Eingriffselement bzw. Eingriffsmittel 51 und die Abwerfereinrichtung 30, insbesondere das Verbindungsmittel 32, ein komplementär ausgebildetes Gegeneingriffselement bzw. Gegeneingriffsmittel 33 auf.

In der Ruhestellung des Betätigungsmittels 40 stehen das Eingriffsmittel 51 und das Gegeneingriffsmittel 33 vorzugsweise außer Eingriff.

Die Kopplungseinrichtung 50 ist vorzugsweise derart ausgebildet, dass ein Betätigen des Betätigungsmittels 40 in die Kopplungsstellung einen Eingriff von Eingriffsmittel 51 und Gegeneingriffsmittel 33 bewirkt. Bei weiterer Betätigung bzw. Bewegung des Betätigungsmittels 40 von der Kopplungsstellung in die Betätigungsstellung bleiben das Eingriffsmittel 51 und das Gegeneingriffsmittel 33 vorzugsweise im Eingriff, so dass eine Kraftübertragung erfolgen kann bzw. erfolgt.

Besonders bevorzugt wird der Eingriff durch eine Verzahnung bewirkt bzw. weisen das Eingriffsmittel 51 und das Gegeneingriffsmittel 33 jeweils zueinander komplementär ausgebildete Verzahnungen bzw. Zähne auf.

Die Kopplungseinrichtung 50 bzw. das Eingriffsmittel 51 und/oder das Gegeneingriffsmittel 33 sind/ist vorzugsweise vollständig im Gehäuse 1A aufgenommen bzw. angeordnet bzw. bewegbar.

Beim Darstellungsbeispiel ist das Koppeln und Entkoppeln vorzugsweise durch eine Führung, insbesondere eine Kulissenführung realisiert. Insbesondere weist die Kopplungseinrichtung 50 eine Kulisse 52 und einen in der Kulisse 32 geführten Steuerzapfen 53 auf.

Beim Bewegen von der Kopplungsstellung in die Betätigungsstellung ist die Kopplungseinrichtung 50 bzw. das Eingriffsmittel 51 vorzugsweise derart geführt, dass eine Kraftübertragung in axialer Richtung bzw. in Abwurfrichtung R2 auf die Abwerfereinrichtung 30, insbesondere das Verbindungsmittel 32 bzw. Gegeneingriffsmittel 33, bewirkt wird. Insbesondere erstreckt sich die Führung bzw. Kulisse 52 zumindest im Wesentlichen in axialer Richtung bzw. parallel zur Längsachse A.

Beim Bewegen von der Ruhestellung in die Kopplungsstellung ist die ist die Kopplungseinrichtung 50 bzw. das Eingriffsmittel 51 vorzugsweise derart geführt, dass es in der Kopplungsstellung zu einer Kopplung kommt.

Beim Darstellungsbeispiel ist das Eingriffsmittel 51 linear auf das Gegeneingriffsmittel 33 zu bewegbar, um den Eingriff zu bewirken. Insbesondere erstreckt sich die Führung bzw. Kulisse 52 in einem rechten oder spitzen Winkel zur Abwurfrichtung R2. Hier sind jedoch auch andere Lösungen möglich, beispielsweise kann das Eingriffsmittel 51 drehbar sein, insbesondere so, dass durch die Drehbewegung ein Eingriff erfolgt.

Die Abwerfereinrichtung 30 und/oder Kopplungseinrichtung 50 sind/ist vorzugsweise derart ausgebildet, dass ein Eingriff in verschiedenen (axialen) Positionen der Abwerfereinrichtung 30, insbesondere des Verbindungsmittels 32 bzw. Gegeneingriffsmittels 33, erfolgen kann.

Wie bereits zuvor erwähnt, kann sich die Aufsteckstellung der Abwerfereinrichtung 30, je nach Pipettenspitze 2, unterscheiden. Das Koppeln ist vorzugsweise in verschiedenen Aufsteckstellungen möglich. Beim Darstellungsbeispiel ist dies durch die dargestellte Verzahnung realisiert. Die Zähne sind so angeordnet, dass, je nach Aufsteckstellung, verschiedene Zähne des Eingriffsmittels 51 und Gegeneingriffsmittels 33 in Eingriff gelangen können. Hier sind jedoch auch andere Lösungen möglich.

Die Pipettiervorrichtung 1 weist vorzugsweise die Positioniereinrichtung 60 auf. Mittels der Positioniereinrichtung 60 ist die Abwerfereinrichtung 30 bzw. das Abwerfermittel 31 vorzugsweise in der Grundstellung gehalten bzw. positioniert.

Die Positioniereinrichtung 60 weist vorzugsweise ein erstes Vorspannmittel 61 und/oder ein zweites Vorspannmittel 62 auf. Insbesondere handelt es sich bei den Vorspannmitteln 61, 62 um Federn.

Das erste Vorspannmittel 61 ist vorzugsweise derart angeordnet, dass es in Abwurfrichtung R2 auf die Abwerfereinrichtung 30 wirkt, und/oder das zweite Vorspannmittel 62 ist vorzugsweise derart angeordnet, dass es in Aufsteckrichtung R1 auf die Abwerfereinrichtung 30 wirkt.

Beim Darstellungsbeispiel ist das erste Vorspannmittel 61 durch das Vorspannmittel 34 gebildet. Insbesondere wird also ein Unterstützen des Abwerfens als auch ein Treiben bzw. Halten der Abwerfereinrichtung 30 in der Grundstellung durch das gleiche Vorspannmittel bewirkt. Hier sind jedoch auch andere Lösungen, bei denen unterschiedliche Vorspannmittel eingesetzt werden, möglich.

Das zweite Vorspannmittel 62 ist vorzugsweise am Schaft 15 bzw. Verdrängergehäuse 12 angeordnet und/oder umgibt dieses zumindest teilweise. Vorzugsweise stützt sich das zweite Vorspannmittel 62 an einem vom Schaft 15 bzw. Verdrängergehäuse 12 gebildeten radialen Vorsprung, insbesondere unmittelbar oberhalb des Endstücks 16, ab.

Vorzugsweise weist die Positioniereinrichtung 60 ein Flanschelement 63 auf. Das Flanschelement 63 umgibt den Schaft 15 bzw. das Verdrängergehäuse 12 vorzugsweise zumindest teilweise radial. Vorzugsweise weist das Flanschelement 63 einen sich in radialer Richtung erstreckenden Abschnitt auf.

Das Flanschelement 63 ist in der Grundstellung vorzugsweise von dem zweiten Vorspannmittel 62 gegen einen Vorsprung bzw. Anschlag 17 gespannt.

Der Vorsprung bzw. Anschlag 17 ist vorzugsweise durch den Schaft 15 bzw. das Verdrängergehäuse 12, insbesondere einstückig, gebildet und/oder ragt in radiale Richtung.

Die Abwerfereinrichtung 30, insbesondere das Abwerfermittel 31, weist vorzugsweise einen Vorsprung bzw. Anschlag 31B auf, der in der Grundstellung gegen das Flanschelement 63 gespannt ist, insbesondere mittels des ersten Vorspannmittels 61. Der Anschlag 31B ist vorzugsweise einstückig mit dem Abwerfermittel 31 gebildet und/oder ragt in radiale Richtung, insbesondere in Richtung des Schafts 15, Verdrängergehäuse 12 bzw. Anschlag 17.

In der Grundstellung liegen der Anschlag 17 und der Anschlag 31B vorzugsweise auf der gleichen Höhe und/oder ist die Grundstellung vorzugsweise durch die Position des Anschlags 17 definiert.

Vorzugsweise ist in der Grundstellung das Flanschelement 63 mittels des zweiten Vorspannmittels 62 gegen den Anschlag 17 gespannt und in dieser Position gehalten und das Abwerfermittel 31 mittels des ersten Vorspannmittels 61 mit seinem Anschlag 31B gegen das Flanschelement 63 gespannt, so dass das Abwerfermittel 31 in der Grundstellung gehalten bzw. positioniert ist.

Im Folgenden wird die Funktionsweise der Positioniereinrichtung 60 des Darstellungsbeispiels anhand der weiteren Figuren 2 bis 4 näher erläutert.

In der in Fig. 2 und 3 dargestellten Aufsteckstellung ist die Abwerfereinrichtung 30, insbesondere der Anschlag 31B, in Aufsteckrichtung verschoben, wodurch das erste Vorspannmittel 61 gespannt, insbesondere gestaucht, ist.

In der Aufsteckstellung ist der Anschlag 31B vorzugsweise vom Flanschelement 63 abgehoben, wie in Fig. 2 und 3 dargestellt. Der Anschlag 31B wird vorzugsweise durch die (reibschlüssige) Verbindung von Pipettenspitze 2 und Endstück 16 in dieser Position gehalten, wie zuvor für die gesamte Abwerfereinrichtung 30 erläutert. Das Flanschelement 63 ist vorzugsweise (weiterhin) gegen den Anschlag 17 gespannt bzw. in der gleichen Position wie bei der Grundstellung gehalten.

Beim Abwerfen der Pipettenspitze 2 bzw. Bewegen des Betätigungsmittels 40 in die Betätigungsstellung wird die Abwerfereinrichtung 30, insbesondere der Anschlag 31B, in Abwurfrichtung R2 bewegt. Hierdurch kommt es vorzugsweise zu einem Anschlagen zwischen dem Anschlag 31B und dem Flanschelement 63, insbesondere wenn (wieder) die Grundstellung erreicht wird.

Vorzugsweise wird die Abwerfereinrichtung 30 bzw. der Anschlag 31B über die Grundstellung hinaus in die Abwurfstellung bewegt bzw. verschoben. Hierdurch wird vorzugsweise das Flanschelement 63 mittels des Anschlags 31B in Abwurfrichtung R2 bewegt bzw. vom Anschlag 17 abgehoben, insbesondere entgegen der Spannkraft des zweiten Vorspannmittels 62, wodurch vorzugsweise das zweite Vorspannmittel 62 gespannt wird. Dies ist in Fig. 4 dargestellt.

Wenn keine Kraft (mehr) in Abwurfrichtung R2 auf das Flanschelement 63 wirkt, insbesondere wenn das Betätigungsmittel 40 losgelassen bzw. die Betätigung beendet wird, kann sich das zweite Vorspannmittel 62 (wieder) entspannen. Dies bewirkt eine Kraft in Aufsteckrichtung R1 auf das Flanschelement 63 und, über das Flanschelement 63, auf den Anschlag 31B, so dass die Abwerfereinrichtung 30 bzw. das Abwerfermittel 31 in Aufsteckrichtung R1 bewegt wird.

Vorzugsweise endet die Bewegung in Aufsteckrichtung R1, wenn es zu einem Anschlagen des Flanschelements 63 an dem Anschlag 17 kommt. Ein Weiterbewegen des Abwerfermittels 31 in Aufsteckrichtung R1 wird vorzugsweise durch die entgegensetzt wirkende Kraft des ersten Vorspannmittels 61 verhindert. Die Abwerfereinrichtung 30 bzw. das Abwerfermittel 31 befindet sich dann vorzugsweise (wieder) in der Grundstellung bzw. verharrt in dieser, bis eine neue Pipettenspitze 2 aufgesteckt wird.

Das Betätigungsmittel 40 ist vorzugsweise zur Untersetzung ausgebildet bzw. weist eine Untersetzungseinrichtung 41 auf. Mittels der Untersetzungseinrichtung 41 kann die durch die Betätigung des Betätigungsmittels 40 auf die Abwerfereinrichtung 30 übertragene Kraft vergrößert werden.

Vorzugsweise weist das Betätigungsmittel 40 bzw. die Untersetzungseinrichtung 41 einen Hebel 42 auf. Der Hebel 42 erstreckt sich vorzugsweise in radialer Richtung und/oder ragt (radial) aus dem Gehäuse 1A heraus.

An seinem ersten Ende ist der Hebel 42 vorzugsweise mit einem Drehlager 43 am Gehäuse 1A befestigt bzw. mit dem Gehäuse 1A verbunden.

Das Drehlager 43 ist vorzugsweise derart ausgebildet, dass der Hebel 42 bzw. das Betätigungsmittel 40 selbsttätig von der Betätigungsstellung die Ruhestellung einnimmt. Hierzu kann beispielsweise eine Rückstellfeder vorgesehen sein.

An seinem zweiten Ende weist der Hebel 42 vorzugsweise einen Betätigungsknopf 44 auf, beim Darstellungsbeispiel eine Verdickung.

Zwischen dem Betätigungsknopf 44 und dem Drehlager 43 ist vorzugsweise das Drehlager 45 angeordnet, das das Betätigungsmittel 40 bzw. den Hebel 42 mit der Abwerfereinrichtung 30 oder der Kopplungseinrichtung 50 verbindet.

Bei der Betätigung des Betätigungsmittels 40 wird der Hebel 42 vorzugsweise um das Drehlager 43 verschwenkt, insbesondere durch ein (manuelles) Herunterdrücken des Betätigungsknopfs 44, was eine (untersetzte) Kraftübertragung über das Drehlager 45 auf die Kopplungseinrichtung 50 bzw. Abwerfereinrichtung 30 bewirkt.

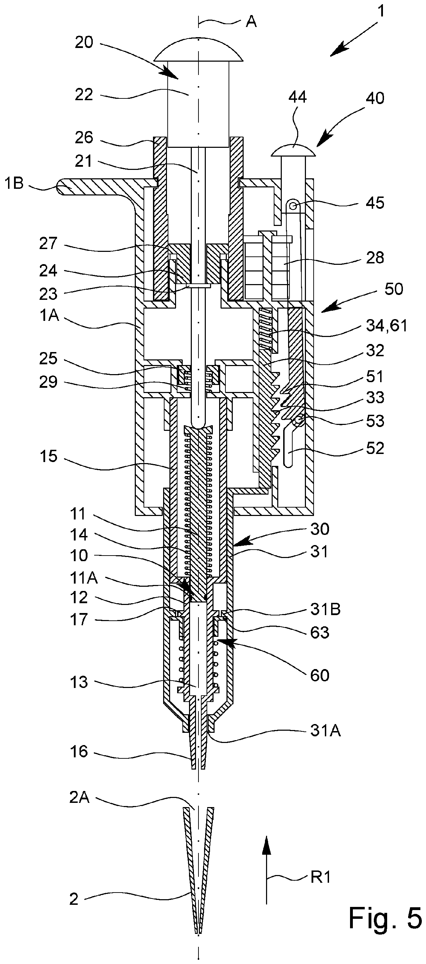

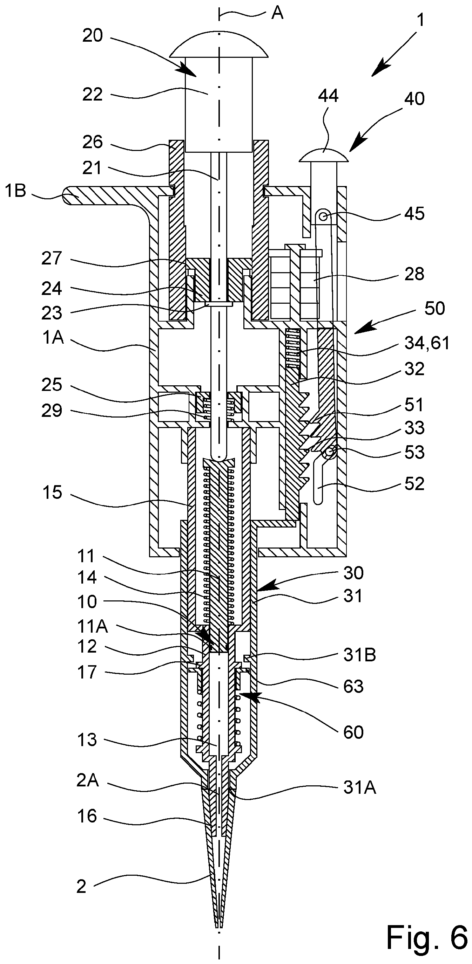

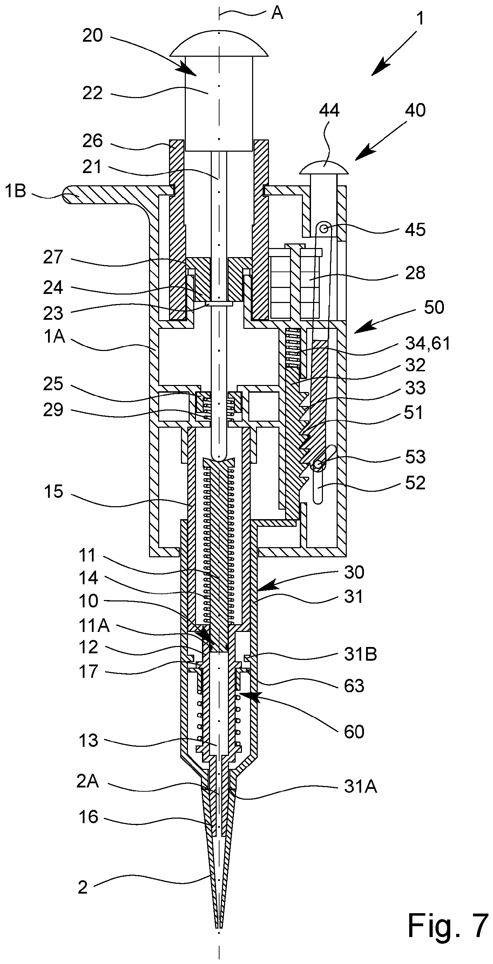

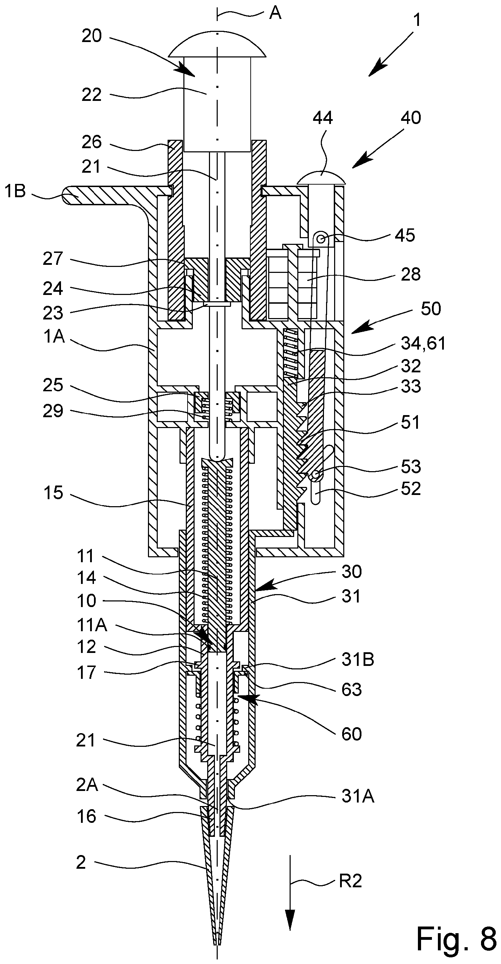

Die Fig. 5 bis 8 zeigen die Pipettiervorrichtung 1 gemäß einer zweiten Ausführungsform, wobei die unterschiedlichen Zustände bzw. Stellungen in den Fig. 5 bis 8 zu denen der Fig. 1 bis 4 korrespondieren.

Die zweite Ausführungsform unterscheidet sich von der ersten Ausführungsform vorzugsweise nur in der Ausbildung des Betätigungsmittels 40. Vorzugsweise gelten daher die vorherigen Ausführungen und Erläuterungen auch für die zweite Ausführungsform, auch wenn dies nicht explizit wiederholt wird.

Beim Darstellungsbeispiel gemäß der zweiten Ausführungsform ist das Betätigungsmittel 40 als Betätigungsknopf 44 ohne Hebel 42 bzw. Untersetzungseinrichtung 41 ausgebildet.

Der Betätigungsknopf 44 ragt vorzugsweise axial aus dem Gehäuse 1A.

Der Betätigungsknopf 44 kann vorzugsweise in axialer Richtung bzw. in Abwurfrichtung R2 bewegt bzw. niedergedrückt werden, was vorzugsweise die zuvor im Zusammenhang mit der ersten Ausführungsform beschriebene Kopplung und/oder das Abwerfen der Pipettenspitze 2 bewirkt.

Vorzugsweise ist der Betätigungsknopf 44 mittels Drehlager 45 mit der Kopplungseinrichtung 50 oder Abwerfereinrichtung 30 verbunden.

Einzelne Aspekte der vorstehend beschriebenen Erfindung können unabhängig voneinander, aber auch in beliebiger Kombination realisiert werden und vorteilhaft sein. Insbesondere sind die Kopplungseinrichtung 50 und die Positioniereinrichtung 60 zwei voneinander unabhängig realisierbare Erfindungsaspekte. Es sind also auch Lösungen möglich, bei denen nur die Kopplungseinrichtung 50 vorgesehen ist, beispielsweise Lösungen, bei denen die Grundstellung und die Abwurfstellung identisch sind. Ebenso sind Lösungen möglich, bei denen nur die Positioniereinrichtung 60 vorgesehen ist, bei denen beispielsweise die Abwerfereinrichtung 30 und das Betätigungsmittel 40 dauerhaft miteinander wirkverbunden sind.

### Bezugszeichenliste:

- 1: Pipettiervorrichtung
- 1A: Gehäuse
- 1B: Vorsprung

- 2: Pipettenspitze
- 2A: Öffnung

- 10: Verdrängereinrichtung
- 11: Verdrängermittel
- 11A: Dichtung
- 12: Verdrängergehäuse
- 13: Hohlraum / Fluidaufnahme
- 14: Rückstellmittel
- 15: Schaft
- 16: Endstück
- 17: Anschlag

- 20: Hubeinrichtung
- 21: Hubstange
- 22: Bedienelement
- 23: Anschlagabschnitt
- 24: erster Anschlag
- 25: zweiter Anschlag
- 26: Einstellmittel
- 27: Gewindeverbindung
- 28: Anzeigemittel
- 29: Überhubfeder

- 30: Abwerfereinrichtung
- 31: Abwerfermittel
- 31A: Öffnung
- 31B: Anschlag
- 32: Verbindungsmittel
- 33: Gegeneingriffsmittel
- 34: Vorspannmittel

- 40: Betätigungsmittel
- 41: Untersetzungseinrichtung
- 42: Hebel
- 43: Drehlager
- 44: Betätigungsknopf
- 45: Drehlager

- 50: Kopplungseinrichtung
- 51: Eingriffsmittel
- 52: Kulisse
- 53: Zapfen

- 60: Positioniereinrichtung
- 61: erstes Vorspannmittel
- 62: zweites Vorspannmittel
- 63: Flanschelement

- A: Längsachse
- R1: Anbringrichtung
- R2: Abwurfrichtung

## Patentansprüche

1. Pipettiervorrichtung (1) zum Aufnehmen und Abgeben von Fluidvolumina, aufweisend
- eine Verdrängereinrichtung (10), insbesondere eine Kolben-Zylinder-Anordnung, mit einem Endstück (16), wobei das Endstück (16) zum lösbaren Anbringen einer Pipettenspitze (2) ausgebildet ist,
- eine Abwerfereinrichtung (30) zum Lösen und Abwerfen einer am Endstück (16) angebrachten Pipettenspitze (2) von der Pipettiervorrichtung (1), wobei die Abwerfereinrichtung (30) ein Abwerfermittel (31) aufweist, und
- ein Betätigungsmittel (40) zum Betätigen der Abwerfereinrichtung (30), insbesondere des Abwerfermittels (31),
wobei das Betätigungsmittel (40) durch, insbesondere manuelle, Betätigung von einer Ruhestellung in eine Betätigungsstellung verstellbar ist,
wobei die Abwerfereinrichtung (30) derart ausgebildet ist, dass durch Verstellen des Betätigungsmittels (40) von der Ruhestellung in die Betätigungsstellung das Abwerfermittel (31) relativ zum Endstück (16) in eine Abwurfstellung bewegbar ist und eine am Endstück (16) angebrachte Pipettenspitze (2) relativ zum Endstück (16) bewegbar und schließlich von der Pipettiervorrichtung (1) abwerfbar ist,
**dadurch gekennzeichnet,**
**dass** die Pipettiervorrichtung (1) eine mit dem Betätigungsmittel (40) und der Abwerfereinrichtung (30) zusammenwirkende Kopplungseinrichtung (50) aufweist,
**dass** die Kopplungseinrichtung (50) derart ausgebildet ist, dass in der Ruhestellung des Betätigungsmittels (40) die Kopplungseinrichtung (50) das Betätigungsmittel (40) von der Abwerfereinrichtung (30) entkoppelt und dass durch Verstellen des Betätigungsmittels (40) von der Ruhestellung in die Betätigungsstellung die Kopplungseinrichtung (50) das Betätigungsmittel (40) mit der Abwerfereinrichtung (30) koppelt, wodurch eine auf das Betätigungsmittel (40) ausgeübte Kraft auf die Abwerfereinrichtung (30), insbesondere das Abwerfermittel (31), übertragbar ist.

2. Pipettiervorrichtung nach Anspruch 1, **dadurch gekennzeichnet, dass**
- durch Verstellen des Betätigungsmittels (40) in die Betätigungsstellung die Kopplungseinrichtung (50) in Eingriff mit der Abwerfereinrichtung (30) bringbar ist und/oder
- in der Ruhestellung des Betätigungsmittels (40) die Kopplungseinrichtung (50) außer Eingriff mit der Abwerfereinrichtung (30) ist und/oder
- beim Verstellen des Betätigungsmittels (40) von der Ruhestellung in die Betätigungsstellung das Betätigungsmittel (40) mit der Kopplungseinrichtung (50) wirkverbunden ist.

3. Pipettiervorrichtung nach Anspruch 1 oder 2, **dadurch gekennzeichnet, dass** die Kopplungseinrichtung (50) ein Eingriffsmittel (51) und die Abwerfereinrichtung (30) ein Gegeneingriffsmittel (33) aufweisen, vorzugsweise wobei
- das Eingriffsmittel (51) mit dem Gegeneingriffsmittel (33) in formschlüssigen, kraftschlüssigen und/oder reibschlüssigen Eingriff bringbar ist, durch den das Betätigungsmittel (40) mit der Abwerfereinrichtung (30) gekoppelt ist, und/oder
- das Eingriffsmittel (51) und das Gegeneingriffsmittel (33) jeweils eine zueinander zumindest bereichsweise komplementär ausgebildete Verzahnung zum Zusammenwirken aufweisen und/oder
- das Eingriffsmittel (51) in einem Gehäuse (1A) der Pipettiervorrichtung (1) geführt ist und/oder
- das Eingriffsmittel (51) mittels des Betätigungsmittels (40) bewegbar, insbesondere verschiebbar, ist, und/oder
- das Eingriffsmittel (51) beweglich mit dem Betätigungsmittel (40) verbunden ist und/oder
- das Eingriffsmittel (51) entlang einer Längsachse (A) der Pipettiervorrichtung (1) bewegbar ist und/oder
- das Eingriffsmittel (51) um eine quer zur Längsachse (A) der Pipettiervorrichtung (1) verlaufende Achse drehbar ist und/oder
- das Gegeneingriffsmittel (33) durch Verstellen des Betätigungsmittels (40) in die Betätigungsstellung bewegbar, insbesondere verschiebbar, ist, wenn die Kopplungseinrichtung (50), insbesondere das Eingriffsmittel (51), mit der Abwerfereinrichtung (30), insbesondere dem Gegeneingriffsmittel (33), gekoppelt ist und/oder
- das Gegeneingriffsmittel (33) mit dem Abwerfermittel (31) derart wirkverbunden ist, dass ein Bewegen, insbesondere Verschieben, des Gegeneingriffsmittels (33) ein Bewegen, insbesondere Verschieben, des Abwerfermittels (31) bewirkt.

4. Pipettiervorrichtung nach einem der vorhergehenden Ansprüche, **dadurch gekennzeichnet, dass** die Pipettiervorrichtung (1) ein Vorspannmittel (34), insbesondere eine Feder, zum Vorspannen des Abwerfermittels (31) aufweist und dass das Vorspannmittel (34) eine Vorspannkraft auf das Abwerfermittel (31) entgegen einer Anbringrichtung (R1) der Pipettiervorrichtung (1) ausübt, vorzugsweise wobei das Vorspannmittel (34) sowohl bei entkoppelter als auch bei gekoppelter Kopplungseinrichtung (50), bevorzugt über das Gegeneingriffsmittel (33), mit dem Abwerfermittel (31) in Wirkverbindung steht.

5. Pipettiervorrichtung nach einem der vorhergehenden Ansprüche, **dadurch gekennzeichnet, dass** das Abwerfermittel (31) das Endstück (16) zumindest teilweise radial umgibt und das Endstück (16) durch eine Öffnung (31A) des Abwerfermittels (31) aus dem Abwerfermittel (31) herausragt.

6. Pipettiervorrichtung nach Anspruch 4 und 5, **dadurch gekennzeichnet, dass** die Vorspannkraft des Vorspannmittels (34) so gewählt ist, dass das Abwerfermittel (31) in der Ruhestellung des Betätigungsmittels (40) in einer Grundstellung verbleibt, in der das Endstück (16) gleich weit oder weiter aus dem Abwerfermittel (31) herausragt als in der Abwurfstellung des Abwerfermittels (31).

7. Pipettiervorrichtung nach einem der vorhergehenden Ansprüche, **dadurch gekennzeichnet, dass** das Abwerfermittel (31) in der Ruhestellung des Betätigungsmittels (40) in einer Anbringrichtung (R1) der Pipettiervorrichtung (1) bis in eine Aufsteckstellung bewegbar ist, insbesondere entgegen der Vorspannkraft des Vorspannmittels (34).

8. Pipettiervorrichtung nach Anspruch 4 und 7, **dadurch gekennzeichnet, dass** die Vorspannkraft des Vorspannmittels (34) so gewählt ist, dass das Abwerfermittel (31) bei einer am Endstück (16) angebrachten und an das Abwerfermittel (31) angrenzenden Pipettenspitze (2) in seiner Aufsteckstellung verbleibt.

9. Pipettiervorrichtung nach einem der Ansprüche 3 bis 8, **dadurch gekennzeichnet, dass** das Eingriffsmittel (51) durch Bewegung zumindest entlang der Längsachse (A) der Pipettiervorrichtung (1) mit dem Gegeneingriffsmittel (33) in Eingriff oder aus dem Eingriff kommt, vorzugsweise wobei die Pipettiervorrichtung (1) eine Kulisse (52) aufweist, in der das Eingriffsmittel (51) geführt ist.

10. Pipettiervorrichtung (1) zum Aufnehmen und Abgeben von Fluidvolumina, insbesondere nach einem der vorhergehenden Ansprüche, aufweisend
- eine Verdrängereinrichtung (10) mit einem Endstück (16) zum lösbaren Anbringen einer Pipettenspitze (2),
- eine Abwerfereinrichtung (30) zum Lösen und Abwerfen einer am Endstück (16) angebrachten Pipettenspitze (2) von der Pipettiervorrichtung (1), wobei die Abwerfereinrichtung (30) ein Abwerfermittel (31) aufweist, und
- ein Betätigungsmittel (40) zum Betätigen der Abwerfereinrichtung (30), insbesondere des Abwerfermittels (31),
wobei die Abwerfereinrichtung (30) derart ausgebildet ist, dass
- durch Verstellen des Betätigungsmittels (40) von einer Ruhestellung in eine Betätigungsstellung das Abwerfermittel (31) relativ zum Endstück (16) in eine Abwurfstellung bewegbar ist und
- eine am Endstück (16) angebrachte Pipettenspitze (2) relativ zum Endstück (16) bewegbar und schließlich von der Pipettiervorrichtung (1) abwerfbar ist und
- das Abwerfermittel (31) in der Ruhestellung des Betätigungsmittels (40) in einer Anbringrichtung (R1) der Pipettiervorrichtung (1) von einer Grundstellung bis in eine Aufsteckstellung bewegbar ist, in der das Abwerfermittel (31) im Falle einer am Endstück (16) angebrachten und an das Abwerfermittel (31) angrenzenden Pipettenspitze (2) verbleibt,
**dadurch gekennzeichnet,**
**dass** die Pipettiervorrichtung (1) eine Positioniereinrichtung (60) aufweist, mittels der das Abwerfermittel (31) in der Grundstellung, die zwischen der Abwurfstellung und der Aufsteckstellung liegt, gehalten wird.

11. Pipettiervorrichtung nach Anspruch 10, **dadurch gekennzeichnet, dass** die Positioniereinrichtung (60) ein erstes Vorspannmittel (61), insbesondere eine erste Feder, aufweist und dass das erste Vorspannmittel (61) eine Vorspannkraft auf das Abwerfermittel (31) entgegen der Anbringrichtung (R1) der Pipettiervorrichtung (1) ausübt.

12. Pipettiervorrichtung nach Anspruch 10 oder 11, **dadurch gekennzeichnet, dass** die Positioniereinrichtung (60) ein zweites Vorspannmittel (62), insbesondere eine zweite Feder, aufweist und dass das zweite Vorspannmittel (62) an einem Ende an dem Abwerfermittel (31) und an einem anderen Ende an der Pipettiervorrichtung (1), insbesondere an der Verdrängereinrichtung (10), befestigt ist und, vorzugsweise bestimmt über die Länge und/oder Vorspannkraft des zweiten Vorspannmittels (62), definiert durch den Abstand beider Enden voneinander, das Abwerfermittel (31) in der Grundstellung hält.

13. Pipettiervorrichtung nach Anspruch 10 oder 11, **dadurch gekennzeichnet, dass** die Positioniereinrichtung (60) ein zweites Vorspannmittel (62), insbesondere eine zweite Feder, aufweist und dass das zweite Vorspannmittel (62) eine Vorspannkraft auf das Abwerfermittel (31) in der Anbringrichtung (R1) der Pipettiervorrichtung (1) ausübt, insbesondere entgegengesetzt zu der Richtung, in der das erste Vorspannmittel (61) der Positioniereinrichtung (60) eine Vorspannkraft auf das Abwerfermittel (31) ausübt.

14. Pipettiervorrichtung nach Anspruch 13, **dadurch gekennzeichnet, dass** die Positioniereinrichtung (60) ein Flanschelement (63) aufweist, das an der Verdrängereinrichtung (10) beweglich und zwischen einem ersten Anschlag (17) an der Verdrängereinrichtung (10) und dem zweiten Vorspannmittel (62) gelagert ist,
dass das zweite Vorspannmittel (62) das Flanschelement (63) gegen den ersten Anschlag (17) drängt,
dass das Abwerfermittel (31) einen zweiten Anschlag (31B), vorzugsweise eine Anformung, aufweist, der bei einer Bewegung des Abwerfermittels (31) entgegen der Anbringrichtung (R1) der Pipettiervorrichtung (1) gegen das Flanschelement (63) stößt und bei einer weiteren Bewegung des Abwerfermittels (31), insbesondere angetrieben durch das erste Vorspannmittel (61) und zusätzlich durch das Betätigungsmittel (40), das Flanschelement (63) entgegen der Wirkung der Vorspannkraft des zweiten Vorspannmittels (62) von dem ersten Anschlag (17) entfernend mitnimmt und, vorzugsweise,
dass das erste Vorspannmittel (61) das Abwerfermittel (31) entgegen der Anbringrichtung (R1) der Pipettiervorrichtung (1) gegen das Flanschelement (63) drängt und das Abwerfermittel (31) in der Grundstellung hält.

15. Pipettiervorrichtung nach Anspruch 12, 13 oder 14, **dadurch gekennzeichnet, dass** beim Verstellen des Betätigungsmittels (40) von der Betätigungsstellung in die Ruhestellung das Abwerfermittel (31) durch die Vorspannkraft des zweiten Vorspannmittels (62) in seine Grundstellung bewegt wird.

16. Pipettiervorrichtung nach einem der vorherigen Ansprüche, **dadurch gekennzeichnet, dass** das Betätigungsmittel (40) eine Untersetzungseinrichtung (41) für die Betätigung von der Ruhestellung in eine Betätigungsstellung aufweist, vorzugsweise wobei die Untersetzungseinrichtung (41) einen Hebel (42) mit einem gehäusefesten Drehlager (43) an einem Ende, einen Betätigungsknopf (44) an einem anderen Ende und dazwischen ein Drehlager (45) zum Verbinden des Betätigungsmittels (40) mit der Abwerfereinrichtung (30) oder der Kopplungseinrichtung (50) aufweist.
